(19) Europäisches Patentamt / European Patent Office / Office européen des brevets

(11) **EP 4 210 853 B1**

(12) **EUROPEAN PATENT SPECIFICATION**

(45) Date of publication and mention
of the grant of the patent:
**01.07.2026 Bulletin 2026/27**

(51) International Patent Classification (IPC):
**B01D 15/22** (2006.01)    **B01D 15/38** (2006.01)
**B01D 63/08** (2006.01)    **B01D 63/10** (2006.01)
**B01D 71/26** (2006.01)    **B01J 20/28** (2006.01)
**B01J 20/286** (2006.01)    **G01N 30/60** (2006.01)

(21) Application number: **21799371.6**

(22) Date of filing: **10.09.2021**

(52) Cooperative Patent Classification (CPC):
**B01D 15/22; B01D 15/3809; B01D 63/082;
B01D 63/107; B01D 69/1411; B01D 69/148;
B01D 71/024; B01D 71/0281; B01D 71/261;
B01D 71/262; B01D 71/36; B01J 20/28004;
B01J 20/28038; B01J 20/286; B01J 20/3204;**
(Cont.)

(86) International application number:
**PCT/US2021/049969**

(87) International publication number:
**WO 2022/056331 (17.03.2022 Gazette 2022/11)**

(54) **AFFINITY CHROMATOGRAPHY DEVICES CONTAINING A FIBRILLATED POLYMER MEMBRANE AND MANIFOLDS CONTAINING THE SAME**

**AFFINITÄTSCHROMATOGRAPHIEVORRICHTUNGEN MIT FIBRILLIERTER POLYMERMEMBRAN UND VERTEILER DAMIT**

**DISPOSITIFS DE CHROMATOGRAPHIE D'AFFINITÉ CONTENANT UNE MEMBRANE POLYMÈRE FIBRILLÉE ET COLLECTEURS LES CONTENANT**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.09.2020 US 202063077518 P
11.03.2021 US 202163159597 P**

(43) Date of publication of application:
**19.07.2023 Bulletin 2023/29**

(73) Proprietor: **W. L. Gore & Associates, Inc.
Newark, DE 19711 (US)**

(72) Inventors:
• **CLINGER, Jared M.**
**Newark, Delaware 19711 (US)**
• **KIM, EuiJun**
**Newark, Delaware 19711 (US)**
• **MABE, Kevin J.**
**Newark, Delaware 19711 (US)**
• **MCMANAWAY, Michael C.**
**Newark, Delaware 19711 (US)**
• **VAN VOORHEES, Eric**
**Newark, Delaware 19711 (US)**

(74) Representative: **HGF
HGF Limited
4th Floor, 1 City Square
Leeds LS1 2ES (GB)**

(56) References cited:
**WO-A1-2005/066631    WO-A1-2011/152788
WO-A1-2017/014817    WO-A1-2017/176522
WO-A1-2020/096563    WO-A1-93/06925
WO-A2-2005/123952**

(52) Cooperative Patent Classification (CPC): (Cont.)
**B01J 20/321; B01J 20/3274; B01J 20/3291;**
B01D 2311/2697

**Description**

**FIELD**

The present disclosure relates generally to affinity chromatography, and more specifically, to an affinity chromatography device that includes a fibrillated polymer membrane containing therein a blend of spherical particles, a particle size distribution that has a D90/D10 less than or equal to 3, and which enables the separation of a targeted molecule from an aqueous mixture. Manifolds containing multiple affinity chromatography devices and manifolds in a parallel configuration are also disclosed.

**BACKGROUND**

Chromatographic methods generally are used to separate and/or purify molecules of interest such as proteins, nucleic acids, and polysaccharides from a mixture. Affinity chromatography specifically involves passing the mixture over a matrix having a ligand specific (i.e., a specific binding partner) for the molecule of interest bound to it. Upon contacting the ligand, the molecule of interest is bound to the matrix and is therefore retained from the mixture. Affinity chromatography provides certain advantages over other types of chromatography. For example, affinity chromatography provides a purification method that can isolate a target protein from a mixture of the target protein and other biomolecules in a single step in high yield. International patent application no. WO 2017/176522 to W. L. Gore & Associates, Inc. describes an affinity chromatography device containing a stacked membrane that contains inorganic particles and at least one impermeable layer. International patent application no. WO 2017/014817 to W. L. Gore & Associates, Inc. describes an affinity chromatography device that contains a stacked membrane assembly or a wound membrane assembly.

Despite the advantages of current affinity chromatography devices, there exists a need in the art for a chromatography device that can be used at shorter residence times than conventional devices while providing the same binding capacity or better binding capacities than current offerings and that is re-useable.

**SUMMARY**

The scope of the claimed invention is defined by the appended claims. In one Aspect ("Aspect 1"), an affinity chromatography device includes a fluid inlet, a fluid outlet fluidly connected to the fluid inlet, a fibrillated polymer membrane positioned between the fluid inlet and fluid outlet and containing therein inorganic particles having a spherical shape and a nominal particle size from about 5 microns, 10 microns, 15 microns, 20 microns, and combinations thereof, and a housing member encompassing the fluid inlet, the fluid outlet and the fibrillated polymer membrane, wherein the spherical shape comprises a round or nearly round shape where the distance from the center of the inorganic particle to the outer edge of the particle at any point is the same or nearly the same distance, where a particle size distribution has a D90/D10 less than or equal to 3, wherein the affinity chromatography device has a dynamic binding capacity (DBC) of at least 35 mg/ml at 10% breakthrough at a residence time of 20 seconds, a hydraulic permeability from about 100 (X $10^{-12}$ cm$^2$) to about 500 (X $10^{-12}$ cm$^2$) and where at least one of the fibrillated polymer membrane and the inorganic particles has covalently bonded thereto an affinity ligand that reversibly binds to a targeted molecule, where the targeted molecule is a protein, antibody, viral vector, and combinations thereof.

According to another Aspect ("Aspect 2") further to Aspect 1, where the inorganic particles having a spherical shape are selected from silica, zeolites, hydroxyapatite, metal oxides and combinations thereof.

According to another Aspect ("Aspect 3") further to any one of Aspects 1 to 2, where the fibrillated polymer membrane comprises an expanded polytetrafluoroethylene membrane, an expanded modified polytetrafluoroethylene membrane, an expanded tetrafluoroethylene copolymer membrane, or an expanded polyethylene membrane.

According to another Aspect ("Aspect 4") further to any one of Aspects 1 to 3, where the fibrillated polymer membrane is an expanded polytetrafluoroethylene membrane.

According to another Aspect ("Aspect 5") further to any one of Aspects 1 to 4, where the affinity ligand is selected from Protein A, Protein G, Protein L, human Fc receptor protein, antibodies, polysaccharides, and combinations thereof.

According to another Aspect ("Aspect 6") further to any one of Aspects 1 to 5, where the inorganic particles comprise at least a first inorganic particle having a spherical shape and a first nominal particle size and a second inorganic particle having a spherical shape and a second nominal particle size, the first and second nominal particle sizes being different from each other.

According to another Aspect ("Aspect 7") further to any one of Aspects 1 to 6, where the inorganic particles having a spherical shape comprises a blend of 10-micron spherical particles and 20-micron spherical particles, and where the blend is from 10:90 to 90:10.

According to another Aspect ("Aspect 8") further to any one of Aspects 1 to 6, where the inorganic particles having a spherical shape comprises a blend of 5-micron spherical particles and 10-micron spherical particles, and where the blend is from 10:90 to 90:10.

According to another Aspect ("Aspect 9") further to any one of Aspects 1 to 6, where the inorganic particles having a spherical shape comprises a blend of 5-micron spherical particles and 20-micron spherical particles, and where the blend is from 10:90 to 90:10.

According to another Aspect ("Aspect 10") further to any one of Aspects 1 to 9, including a cycling durability of at least 100 cycles at an operating pressure less than 0.3 MPa.

According to another Aspect ("Aspect 11") further to any one of Aspects 1 to 10, where the fibrillated polymer membrane has a wound configuration.

According to another Aspect ("Aspect 12") further to any one of Aspects 1 to 11, where the fibrillated polymer membrane has a stacked configuration.

According to another Aspect ("Aspect 13") further to any one of Aspects 1 to 12, where the fibrillated polymer membrane has a wound configuration, a stacked configuration, and a combination thereof.

According to another Aspect ("Aspect 14") further to any one of Aspects 1 to 13, where an inner intermediate material is circumferentially positioned on an outer surface of a core and where the fibrillated polymer membrane is circumferentially positioned on the inner intermediate material.

According to another Aspect ("Aspect 15") further to Aspect 14, where the outer intermediate material circumferentially positioned on the fibrillated polymer membrane.

According to another Aspect ("Aspect 16") further to Aspect 14 or Aspect 15, where the inner intermediate material and outer intermediate material are selected from a porous fluoropolymer film, a porous non-fluoropolymer film, a porous non-woven material, and a porous woven material.

According to another Aspect ("Aspect 17") further to any one of Aspects 14 to 16, where at least one of the inner intermediate material and outer intermediate material is a polypropylene non-woven material.

According to another Aspect ("Aspect 18"), where the article of any one of Aspects 14 to 17 is used to separate the targeted molecule from a fluid stream.

In one Aspect ("Aspect 19") a manifold includes at least two of the affinity chromatography devices of any one of Aspects 1 to 17 are arranged in a parallel configuration.

According to another Aspect ("Aspect 20") further to Aspect 19, where the manifold is enclosed within a housing.

In one Aspect not within the scope of the claimed invention ("Aspect 21") an article includes a first manifold and a second manifold in a parallel configuration, where each of the first manifold and the second manifold includes a plurality of the affinity chromatography devices of any one of Aspects 1 to 17.

In another Aspect not within the scope of the claimed invention ("Aspect 22") further to Aspect 21, where the first manifold and the second manifold are enclosed within a housing.

In one Aspect not within the scope of the claimed invention ("Aspect 23") an article includes a centrally located core, a fibrillated polymer membrane containing therein spherical inorganic particles having a spherical shape and a nominal particle size from about 5 microns to about 20 microns wound around the core, a housing member surrounding both the core and the fibrillated polymer membrane, a first end cap positioned at a first end of the housing member, and a second end cap positioned at a second end of the housing member, where a particle size distribution has a D90/D10 less than 3, and at least one of the fibrillated polymer membrane and the spherical inorganic particles has covalently bonded thereto an affinity ligand that reversibly binds to a targeted molecule.

According to another Aspect not within the scope of the claimed invention ("Aspect 24") further to Aspect 23, where the targeted molecule is a protein, antibody, viral vector, and combinations thereof.

According to another Aspect not within the scope of the claimed invention ("Aspect 25") further to Aspect 23 or Aspect 24, including a hydraulic permeability from about 100 (X $10^{-12}$ cm$^2$) to about 500 (X $10^{-12}$ cm$^2$).

According to another Aspect not within the scope of the claimed invention ("Aspect 26") further to any one of Aspects 23 to 25, where the inorganic particles having a spherical shape are selected from silica, zeolites, hydroxyapatite, metal oxides and combinations thereof.

According to another Aspect not within the scope of the claimed invention ("Aspect 27") further to any one of Aspects 23 to 26, where the fibrillated polymer membrane includes at least one of an expanded polytetrafluoroethylene membrane, an expanded modified polytetrafluoroethylene membrane, an expanded tetrafluoroethylene copolymer membrane, or an expanded polyethylene membrane.

According to another Aspect not within the scope of the claimed invention ("Aspect 28") further to any one of Aspects 23 to 27, where the fibrillated polymer membrane is an expanded polytetrafluoroethylene membrane.

According to another Aspect not within the scope of the claimed invention ("Aspect 29") further to any one of Aspects 23 to 28, where the affinity ligand is selected from Protein A, Protein G, Protein L, human Fc receptor protein, antibodies, polysaccharides, and combinations thereof.

According to another Aspect not within the scope of the claimed invention ("Aspect 30") further to any one of Aspects 23 to 29, where the inorganic particles include at least a first inorganic particle having a spherical shape and a first nominal particle size and a second inorganic particle having a spherical shape and a second nominal particle size, and where the first and second nominal particle sizes are different from each other.

According to another Aspect not within the scope of the claimed invention ("Aspect 31") further to any one of Aspects 23 to 30, where the nominal particle size is selected from about 5 microns, about 10 microns, about 15 microns, about 20 microns, and combinations thereof.

According to another Aspect not within the scope of the claimed invention ("Aspect 32") further to any one of Aspects 23 to 30, where the inorganic particles having a spherical shape include a blend of 10-micron spherical particles and 20-micron spherical particles, and where the blend is from 10:90 to 90:10.

According to another Aspect not within the scope of the claimed invention ("Aspect 33") further to any one of Aspects 23 to 30, where the inorganic particles having a spherical shape include a blend of 5-micron spherical particles and 10-micron spherical particles, and where the blend is from 10:90 to 90:10.

According to another Aspect not within the scope of the claimed invention ("Aspect 34") further to any one of Aspects 23 to 30, where the inorganic particles having a spherical shape comprise a blend of 5-micron spherical particles and 20-micron spherical particles, and where the blend is from 10:90 to 90:10.

According to another Aspect not within the scope of the claimed invention ("Aspect 35") further to any one of Aspects 23 to 34, including a dynamic binding capacity (DBC) of at least 35 mg/ml at a residence time of 20 seconds.

According to another Aspect not within the scope of the claimed invention ("Aspect 36") further to any one of Aspects 23 to 35, including a cycling durability of at least 100 cycles and an operating pressure less than 0.3 MPa.

According to another Aspect not within the scope of the claimed invention ("Aspect 37") further to any one of Aspects 23 to 36, where an inner intermediate material is circumferentially positioned on an outer surface of a core and the fibrillated polymer membrane is circumferentially positioned on the inner intermediate material.

According to another Aspect not within the scope of the claimed invention ("Aspect 38") further to any one of Aspects 23 to 37, including an outer intermediate material circumferentially positioned on the fibrillated polymer membrane.

According to another Aspect not within the scope of the claimed invention ("Aspect 39") further to Aspect 38, where the inner intermediate material and the outer intermediate material are selected from a porous fluoropolymer film, a porous non-fluoropolymer film, a porous non-woven material, and a porous woven material.

According to another Aspect not within the scope of the claimed invention ("Aspect 40") further to Aspect 39, where at least one of the inner intermediate material and outer intermediate material is a polypropylene non-woven material.

According to one Aspect not within the scope of the claimed invention ("Aspect 41") a manifold includes at least two of the affinity chromatography devices of any one of claims 23 to 40 arranged in a parallel configuration.

According to another Aspect not within the scope of the claimed invention ("Aspect 42") further to Aspect 41 where the manifold is enclosed within a housing.

According to one Aspect not within the scope of the claimed invention ("Aspect 43") a device includes a first manifold and a second manifold in a parallel configuration, where each of the first manifold and the second manifold includes at least two of the affinity chromatography devices of any one of claims 23 to 40.

According to another Aspect not within the scope of the claimed invention ("Aspect 44") further to Aspect 43, where the first manifold and the second manifold are enclosed within a housing.

In one Aspect not within the scope of the claimed invention ("Aspect 45"), an affinity chromatography device includes a housing, an inlet to permit fluid flow into the housing, first and second flow distributors, the first flow distributor and the second flow distributor positioned at opposing ends of the housing, an outlet to permit fluid flow out of the housing, and a stacked membrane assembly disposed within the housing between the fluid inlet and fluid outlet, the stacked membrane assembly that includes two or more fibrillated polymer membranes in a stacked configuration, the fibrillated polymer membrane containing therein a blend of inorganic particles having a spherical shape and a nominal particle size from about 5 microns to about 20 microns, a particle size distribution has a D90/D10 less than 3, and at least one of the fibrillated polymer membrane and the spherical inorganic particles has covalently bonded thereto an affinity ligand that reversibly binds to a targeted molecule.

According to another Aspect not within the scope of the claimed invention ("Aspect 46") further to Aspect 45, including first and second flow distributors, the first flow distributor and the second flow distributor positioned at opposing ends of the housing member.

According to another Aspect not within the scope of the claimed invention ("Aspect 47") further to Aspect 45 or Aspect 46, where the targeted molecule is a protein, antibody, viral vector, and combinations thereof.

According to another Aspect not within the scope of the claimed invention ("Aspect 48") further to any one of Aspects 45 to 47, including a hydraulic permeability from about 100 (X $10^{-12}$ cm$^2$) to about 500 (X $10^{-12}$ cm$^2$).

According to another Aspect not within the scope of the claimed invention ("Aspect 49") further to any one of Aspects 45 to 48, where the inorganic particles having a spherical shape are selected from silica, zeolites, hydroxyapatite, metal oxides and combinations thereof.

According to another Aspect not within the scope of the claimed invention ("Aspect 50") further to any one of Aspects 45 to 49, where the fibrillated polymer membrane includes an expanded polytetrafluoroethylene membrane, an expanded modified polytetrafluoroethylene membrane, an expanded tetrafluoroethylene copolymer membrane, or an expanded polyethylene membrane.

According to another Aspect not within the scope of the claimed invention ("Aspect 51") further to any one of Aspects 45 to 50, where the fibrillated polymer membrane is an expanded polytetrafluoroethylene membrane.

According to another Aspect not within the scope of the claimed invention ("Aspect 52") further to any one of Aspects 45 to 51, where the affinity ligand is selected from Protein A, Protein G, Protein L, human Fc receptor protein, antibodies, polysaccharides, and combinations thereof.

According to another Aspect not within the scope of the claimed invention ("Aspect 53") further to any one of Aspects 45 to 52, where the inorganic particles include at least a first inorganic particle having a spherical shape and a first nominal particle size and a second inorganic particle having a spherical shape and a second nominal particle size, where the first and second nominal particle sizes are different from each other.

According to another Aspect not within the scope of the claimed invention ("Aspect 54") further to any one of Aspects 45 to 53, where the nominal particle size is selected from about 5 microns, about 10 microns, about 15 microns, about 20 microns, and combinations thereof.

According to another Aspect not within the scope of the claimed invention ("Aspect 55") further to any one of Aspects 45 to 54, where the inorganic particles having a spherical shape comprises a blend of 10-micron spherical particles and 20-micron spherical particles, and where the blend is from 90:10 to 10:90.

According to another Aspect not within the scope of the claimed invention ("Aspect 56") further to any one of Aspects 45 to 54, where the inorganic particles having a spherical shape comprises a blend of 5-micron spherical particles and 10-micron spherical particles, and where the blend is from 10:90 to 90:10.

According to another Aspect not within the scope of the claimed invention ("Aspect 57") further to any one of Aspects 45 to 54, where the inorganic particles having a spherical shape comprises a blend of 5-micron spherical particles and 20-micron spherical particles, and where the blend is from 10:90 to 90:10.

According to another Aspect not within the scope of the claimed invention ("Aspect 58") further to any one of Aspects 45 to 57, including a dynamic binding capacity (DBC) of at least 35 mg/ml at a residence time of 20 seconds.

According to another Aspect not within the scope of the claimed invention ("Aspect 59") further to any one of Aspects 45 to 58, including a cycling durability of at least 100 cycles and an operating pressure less than 0.3 MPa.

According to another Aspect not within the scope of the claimed invention ("Aspect 60") further to any one of Aspects 45 to 59, where at least one first intermediate material is positioned on a first side of the stacked membrane assembly and a second intermediate material is positioned on a second side of the stacked membrane assembly, the second side opposing the first side.

According to another Aspect not within the scope of the claimed invention ("Aspect 61") further to Aspect 60, where the first intermediate material and the second intermediate material are selected from a porous fluoropolymer film, a porous non-fluoropolymer film, a porous non-woven material, and a porous woven material.

According to another Aspect not within the scope of the claimed invention ("Aspect 62") further to Aspect 61, where at least one of the first intermediate material and the second intermediate material is a polypropylene non-woven material.

In one Aspect not within the scope of the claimed invention ("Aspect 63") a manifold includes at least two of the affinity chromatography devices of any one of claims 45 to 62 arranged in a parallel configuration.

According to another Aspect not within the scope of the claimed invention ("Aspect 64") further to Aspect 63, where the manifold is enclosed within a housing.

In one Aspect not within the scope of the claimed invention ("Aspect 65") a device includes a first manifold and a second manifold in a parallel configuration where each of the first manifold and the second manifold includes at least two of the affinity chromatography devices of any one of claims 45 to 62.

According to another Aspect not within the scope of the claimed invention ("Aspect 66") further to Aspect 65, where the first manifold and the second manifold are enclosed within a housing.

In another Aspect not within the scope of the claimed invention ("Aspect 67"), a diagnostic article includes a fibrillated polymer membrane containing therein inorganic particles having a spherical shape and a nominal particle size from about 5 microns to about 20 microns where a particle size distribution has a D90/D10 less than or equal to 3 and where at least one of the fibrillated polymer membrane and the inorganic particles has covalently bonded thereto a ligand that reversibly binds to a targeted substance in a biological fluid.

According to another Aspect not within the scope of the claimed invention ("Aspect 68") further to Aspect 67, including a fluid inlet and a fluid outlet fluidly connected to the fluid inlet.

According to another Aspect not within the scope of the claimed invention ("Aspect 69") further to Aspect 67 or Aspect 68 including a housing member encompassing the fluid inlet, the fluid outlet, and the fibrillated polymer membrane.

## BRIEF DESCRIPTION OF THE DRAWINGS

The accompanying drawings are included to provide a further understanding of the disclosure and are incorporated in and constitute a part of this specification, illustrate embodiments, and together with the description serve to explain the principles of the disclosure.

FIG. 1 is an exploded view of a chromatography device containing a wound membrane assembly including a fibrillated polymer membrane containing therein spherical inorganic polymer particles according to at least one embodiment;

FIG. 2 is a cross section of a chromatography device depicting the outer flow channel and inner flow channel according to at least one embodiment in accordance with at least one embodiment;

FIG. 3 is a schematic cross-section of another spiral wound, normal flow chromatography device in accordance with at least one embodiment;

FIG. 4 is an exploded view of a chromatography device containing a stacked membrane assembly including a fibrillated polymer membrane containing therein spherical inorganic particles in accordance with at least one embodiment;

FIG. 5 is a graphical illustration depicting the relationship between dynamic binding capacity (DBC) and liquid permeability from the affinity chromatography devices described in Examples 1 and 2;

FIG. 6 is a graphical illustration depicting the relationship of devices S and T with spiral wound membrane to affinity chromatography devices C through R with stacked membranes in accordance with at least one embodiment;

FIG. 7 is a schematic illustration of a front view of a manifold containing two chromatography devices arranged in a parallel configuration;

FIG. 8 is a schematic illustration of a top view of the manifold of FIG. 7;

FIG. 9 is a schematic illustration of a perspective view of a manifold containing four chromatography devices arranged in a parallel configuration;

FIG. 10 is a schematic illustration of a top view of the manifold of FIG. 9.

FIG. 11 is a schematic illustration of a front view of two manifolds in a parallel configuration;

FIG. 12 is a schematic illustration of a top view of the manifold configuration of FIG. 11.

FIG. 13 is a graphical illustration of a representative purification cycle for the dual manifolds V and W described in Example 3;

FIG. 14 is a graphical illustration of a representative purification cycle for the dual manifold X described in Example 3; and

FIG. 15 is a graphical illustration of a representative purification cycle for the quad manifolds described in Example 4.

## DETAILED DESCRIPTION

Persons skilled in the art will readily appreciate that various aspects of the present disclosure can be realized by any number of methods and apparatus configured to perform the intended functions. It should also be noted that the accompanying figures referred to herein are not necessarily drawn to scale but may be exaggerated to illustrate various aspects of the present disclosure, and in that regard, the figures should not be construed as limiting. It is to be understood that, as used herein, the term "on" is meant to denote an element, such as a polymer membrane, is directly on another element or intervening elements may also be present.

It is to be appreciated that the phrases "spherical particles", "spherical inorganic particles", and "inorganic particles having a spherical shape" may be interchangeably herein. Additionally, the term "spiral wound membrane assembly" is meant to include both the fibrillated polymer membrane alone and the fibrillated polymer membrane with the intermediate non-woven material. Further, the term "stacked membrane assembly" is meant to include both the fibrillated polymer membrane alone and the fibrillated polymer membrane with one or more intermediate material(s). In addition, the terms "affinity chromatography device" and "chromatography device" may be used interchangeably herein.

The present disclosure is directed to affinity chromatography devices that separate a targeted molecule from an aqueous mixture containing the targeted molecule. The targeted molecule includes, but is not limited to, proteins, antibodies, viral vectors, and combinations thereof. In some embodiments, the present disclosure is directed to diagnostic devices that separate a targeted disease from a biological sample. The chromatography device and diagnostic device include a fibrillated polymer membrane that contains a blend of inorganic particles having a spherical shape and a particle size distribution that has a D90/D10 less than or equal to 3. In some embodiments, a blend or combination of various sizes of the spherical inorganic particles is utilized. A nominal particle size of the spherical inorganic particles is from about 5 microns to about 20 microns. An affinity ligand is bonded to the spherical inorganic particles and/or to the fibrillated polymer membrane. In addition, the chromatography devices have a dynamic binding capacity (DBC) greater than 40 mg/ml at 10% breakthrough at a residence time of 20 seconds. In addition, the affinity chromatography devices have a cycling durability of at least 100 cycles without exceeding an operating pressure of 0.3 MPa. It is to be appreciated that the term "about" as used herein denotes +/- 10% of the designated unit of measure.

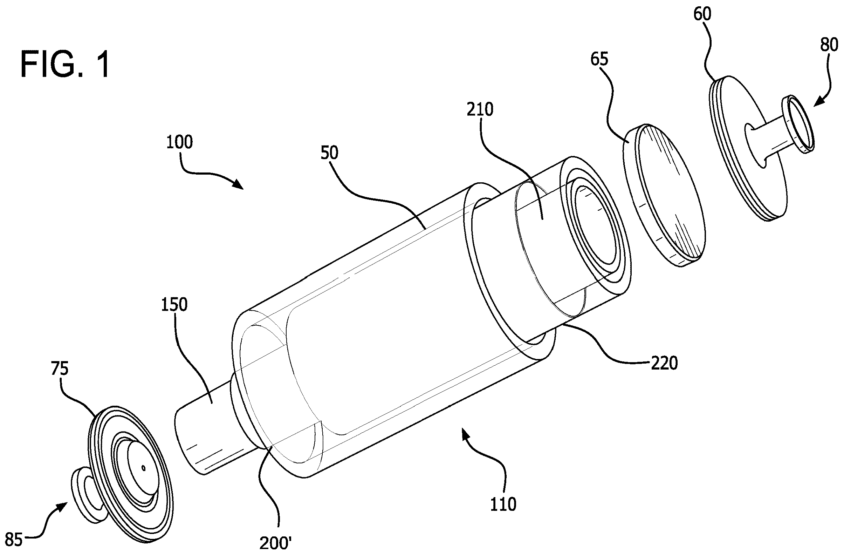

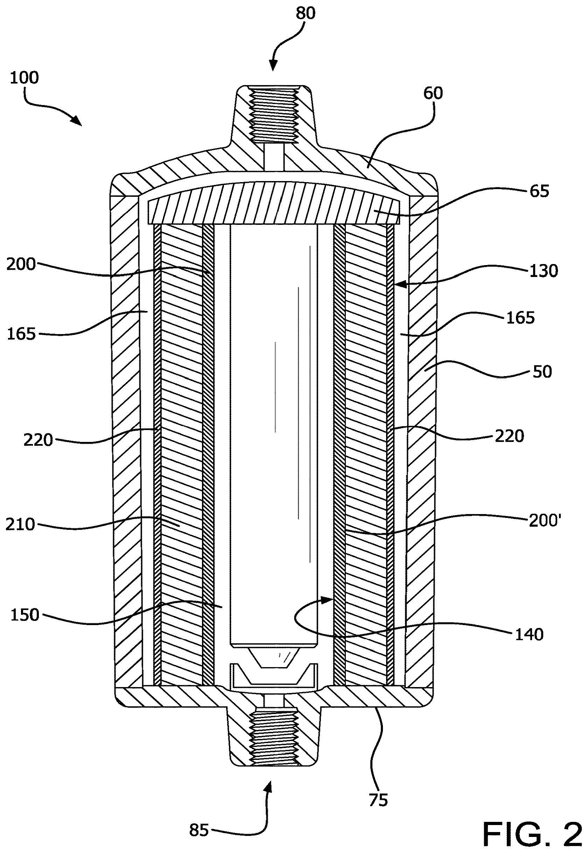

Looking at FIGS. 1 and 2, a wound chromatography device 100 is depicted. In forming the chromatography device 100, at least one fibrillated polymer membrane containing therein spherical inorganic particles is wrapped around a cylindrical core 150. Fibrillated, as used herein, refers to the inclusion of fibrils in a polymer membrane, such as, for example, a membrane having a microstructure characterized by nodes interconnected by fibrils where voids are the spaces between the nodes and fibrils. In some embodiments, at least one inner intermediate material 200' may be circumferentially positioned against (e.g., wound around) the core 150 to a desired width or a pre-designated amount. A fibrillated polymer membrane containing spherical inorganic particles therein 210 is then wound around the core 150 over the inner intermediate material 200' to a desired width or a pre-designated amount, and an outer layer of at least one outer intermediate material 220 is circumferentially positioned on (e.g., wound around) the fibrillated polymer membrane 210 to a desired width or a pre-designated amount. Herein, the combination of the inner intermediate material 200', the fibrillated polymer membrane 210, and the outer intermediate material 220 will be referred to as the "wound membrane assembly". The "wound membrane assembly", in some embodiments, may include a fibrillated polymer membrane and an inner intermediate material(s), a fibrillated polymer membrane and an outer intermediate material(s), as well as any combination of polymers and/or polymer and intermediate material wrapped around a core. The cylindrical core 150 may have a hollow or solid interior. In either instance, the core 150 contains a solid outer wall so that an aqueous mixture flowing through the chromatography device 100 flows within an inner flow channel formed of the inner intermediate material(s), which is discussed in detail below. The use of a hollow core 150 reduces the amount of material used to form the core 150, reduces the weight of the device 100, and reduces manufacturing costs.

The membrane assembly 110 and central core 150 may be positioned within a housing 50. In some embodiments, the housing 50 is cylindrical. In the embodiment depicted in FIGS. 1 and 2, the outer intermediate material(s) 220 forms an outer flow channel 130 and the inner intermediate material(s) 200' form an inner flow channel 140. It is to be appreciated that the intermediate material(s) 200', 220 in the embodiments described herein may be different or they may be the same. Additionally, two or more intermediate materials may be used to form one or both of the outer flow channel 130 and the inner flow channel 140. In use, an aqueous mixture flows into the inlet 80 positioned within inlet cap 60 where the mixture flows over the distributor cap 65 and is directed towards the outer flow channel 130 formed by the outer intermediate material(s) 220. The distributor cap 65 directs the aqueous mixture 90 degrees from the feed direction towards the outer flow channel 130 (*i.e.*, intermediate material(s) 220). This redirection promotes a more uniform flow of the aqueous mixture into the outer flow channel 130. The outer intermediate layers 220 forming the outer flow channel 130 is located between the housing 50 and the wound polymer membrane 210. The distributor cap 65 may be a polyolefin or be coated with a polyolefin. It is to be appreciated that the aqueous mixture flows along an outer channel gap 165 and connects with the inner flow channel 130.

The aqueous mixture flows through the outer flow channel 130 (*i.e.*, outer intermediate material(s) 220) across the wound polymer membrane 210 in a normal direction (e.g., a normal flow). As the aqueous mixture is passed in a normal flow from the outer flow channel 130 (i.e., outer intermediate material(s) 220) and across the wound polymer membrane 210, the affinity ligand reversibly binds to the targeted protein, thereby effectively removing it from the aqueous mixture. The aqueous mixture then enters the inner flow channel 140 (i.e., inner intermediate material(s) 200') located between the solid outer wall of the central core 150 and the wound polymer membrane 210.

The aqueous mixture then is redirected at the bottom of the inner flow channel 140 by an outlet cap 75. The aqueous mixture then flows out of the chromatography device 100 through outlet 85 located within the outlet cap 75. It is to be appreciated that the diameter and/or height of the central core 150 (and/or the width and/or height of the fibrillated polymer membrane and/or intermediate material(s)) can be adjusted to achieve a larger volume without negatively impacting performance of the device. Additionally, the targeted protein may be removed from the affinity ligand, for example, by passing a fluid that has a lower pH through the chromatography device, as is known by those of ordinary skill in the art.

The intermediate material(s) 200', 220, and 40 is not particularly limiting so long as the aqueous mixture is able to flow therethrough. Some non-limiting examples of suitable intermediate materials include, but are not limited to, a porous fluoropolymer film or a porous non-fluoropolymer film (e.g., a porous polypropylene or other porous polyolefin film), a porous non-woven material, or a porous woven material. In some embodiments, the wound membrane assembly includes an integrated inlet end cap 60 at one end of the core 150 and an integrated outlet end cap 75 at an opposing end of the core 150 to form an integrated, reusable chromatography device.

The total number of fibrillated polymer membrane layers present in the wound membrane assembly is not particularly limited and depends on the desired end use and/or desired mass transit flow within the membrane assembly. The wound membrane assembly may include 2, 3, 4, 5, 6, 7, 8, 9, 10, 11, 12, 13, 14, 15, 16, 17, 18, 19, or 20 (or more) total polymer membrane layers. It is to be appreciated that hundreds or even thousands of polymer membrane layers may be present in the stacked membrane assembly. In addition, the fibrillated polymer membrane present in the wound membrane assembly may have a single layer thickness from about 1 micron to about 10,000 microns, from about 100 microns to about 5,000 microns, from about 500 microns to about 3,000 microns, or from about 650 microns to about 1,000 microns. As used herein, the term "thickness" is the direction of the fibrillated polymer membrane normal to the length area of the fibrillated polymer membrane.

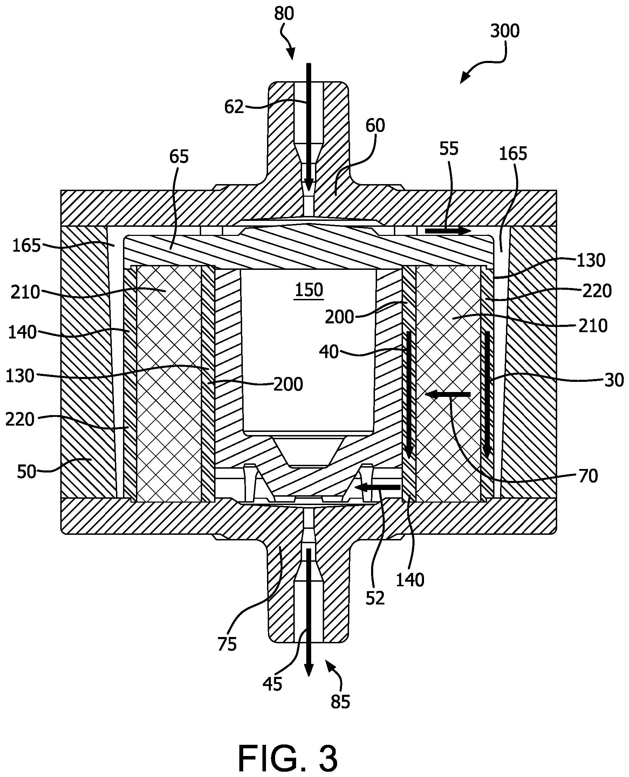

The function of the chromatography device 300 depicted in FIG. 3 is substantially similar to the chromatography device 100 depicted in FIG. 2. For instance, an aqueous mixture is introduced into the chromatography device 300 via the inlet 80 positioned within inlet cap 60 in the direction of arrow 62. The aqueous mixture is directed from the feed direction by the distributor cap 65. For ease of description, the aqueous mixture may flow in the direction depicted by arrow 55 towards the outer flow channel 130 (which may be formed of outer intermediate material(s) 220). The aqueous mixture flows along an outer channel gap 165 and connects with the inner flow channel 140 where it flows in the direction of arrow 30. The aqueous mixture flows across the wound polymer membrane 210 in a normal direction (e.g., a normal flow) as shown by arrow 70 from the inner flow channel 130 to the inner flow channel 140. As the aqueous mixture passes through the wound polymer membrane 210, the affinity ligand reversibly binds to the targeted molecule. It is to be appreciated that the inner flow channel 140 may be formed of inner intermediate material(s) 200'.

The aqueous mixture free of the targeted molecule flows down the inner flow channel 140 in the direction depicted by arrow 40. The aqueous mixture is redirected at the bottom of the inner flow channel 140 the towards the central portion of the chromatography device 300 as depicted by arrow 52. The aqueous mixture free of the targeted molecule flows out of the chromatography device 300 through outlet 85 positioned within the outlet end cap 75 in the direction of arrow 45.

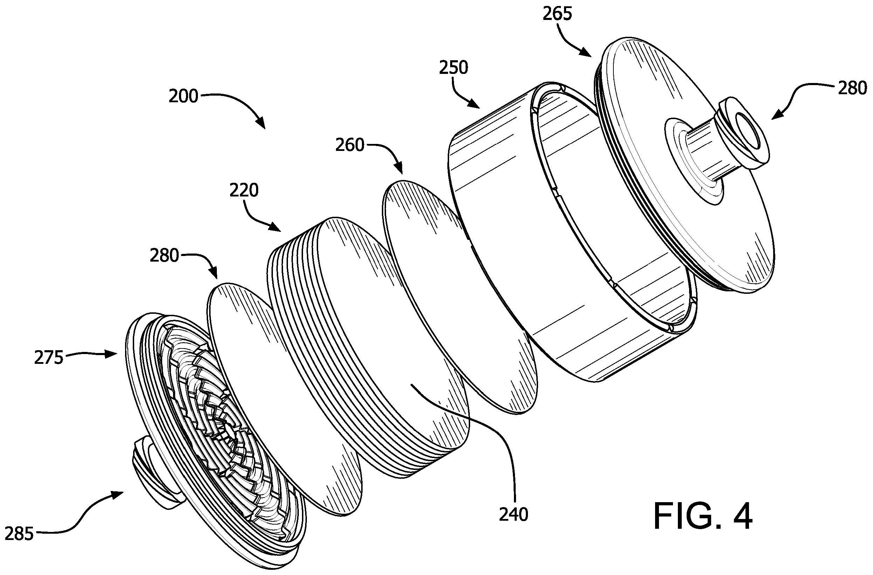

In other embodiments, such as is depicted generally in FIG. 4, the chromatography device 200 contains a fibrillated polymer membrane configured as individual discs 240 stacked upon each other to form a stacked membrane assembly 220. The fibrillated polymer membrane 240 may be positioned in a stacked configuration by simply laying the fibrillated polymer membrane discs 240 on top of each other. Alternatively, the fibrillated polymer membrane discs 240 may be stacked and subsequently laminated together with heat and/or pressure or other conventional methods. It is to be appreciated that the stacked membrane assembly 240 described herein is with respect to fibrillated polymer membrane discs for ease of explanation. The fibrillated polymer membrane formed in their geometric shape(s) and/or non-geometric shape(s) are considered to be within the purview of the disclosure.

The chromatography device 200 includes at least one upper intermediate material(s) 260 positioned at the top of the stacked membrane assembly and at least one lower intermediate material(s) 280 positioned at the bottom of the stacked membrane assembly 220. The upper and lower intermediate material(s) 260, 280, respectively, may be the same or different. Similar to the wound membrane assembly discussed above, the intermediate material(s) 260, 280 used to form the stacked membrane assembly 220 is not particularly limiting so long as the aqueous mixture is able to flow therethrough. Non-limiting examples of suitable intermediate materials include, but are not limited to, a porous fluoropolymer film or a porous non-fluoropolymer film (e.g., a porous polypropylene or other porous polyolefin film), a porous non-woven material, or a porous woven material.

The stacked membrane assembly 220 may be disposed within a housing 250 having an inlet cap 265 and an outlet end cap 275 disposed at opposite ends of the housing 250. In some embodiments, the housing 250 is cylindrical, although any geometry that is capable of housing the stacked membrane assembly and achieving a desired dynamic binding capacity is considered to be within the purview of this disclosure. In some embodiments, the intermediate material(s) 260, 280, the housing 250, the inlet cap 265, and the outlet cap 275 may be formed of a thermoplastic polymer such as polypropylene, polyethylene, or other polyolefins. Alternatively, one or both of the intermediate material(s) 260, 280 may be formed of an inorganic or metallic material, so long as the porous intermediate material(s) 260, 280 do not hinder the operation of the chromatography device.

The fibrillated polymer membranes 240 in the stacked membrane assembly 220 may be adhered to the housing 250 at the inner walls of the housing 250 via any conventional process (e.g., melt sealing or use of a sealant) that prevents flow between the periphery of the fibrillated polymer membranes 240 and the housing 250. The inlet cap 265 and the outlet cap 275 may be sealed to the housing 250 by a similar or identical process. The inlet cap and the outlet cap 265, 275 includes an inlet 280 and an outlet 285, respectively, to permit the flow of an aqueous mixture through the affinity chromatography device 200. Specifically, the inlet cap 265 permits fluid flow of the aqueous mixture into the housing 250 and the outlet cap 285 permits fluid flow of the aqueous mixture out of the housing 250. In use, the aqueous mixture flows sequentially through the intermediate material(s) 260, through the fibrillated polymer membranes 240 forming the stacked membrane assembly 220, and through the intermediate material(s) 280. As the aqueous mixture is passed through the chromatography device 200, the affinity ligand reversibly binds to the targeted molecule, thereby effectively removing it from the aqueous mixture. The targeted molecule may be removed from the affinity ligand, for example, by passing a fluid that has a lower pH through the device, as is known by those of skill in the art.

The total number of fibrillated polymer membranes present in the stacked membrane assembly is not particularly limited and depends on the desired end use and/or desired mass transit flow within the membrane assembly. The stacked membrane assembly may include 2, 3, 4, 5, 6, 7, 8, 9, 10, 11, 12, 13, 14, 15, 16, 17, 18, 19, or 20 (or more) total polymer membranes. It is to be appreciated that hundreds or even thousands of polymer membranes may be present in the stacked membrane assembly. In addition, the fibrillated polymer membranes present in the stacked membrane assembly may have a thickness from about 1 micron to about 10,000 microns, from about 100 microns to about 5,000 microns, from about 500 microns to about 3,000 microns, or from about 650 microns to about 1,000 microns. As used herein, the term "thickness" is the direction of the fibrillated polymer membrane normal to the length area of the fibrillated polymer membrane.

The fibrillated polymer membranes in both the wound membrane assembly and the stacked membrane assembly contain spherical inorganic particles, or particles having a spherical configuration. As used herein, the term "spherical" is meant to denote that the inorganic particle has a round or nearly round shape where the distance from the center of the inorganic particle to the outer edge of the particle at any point is the same or nearly the same distance. In some embodiments, the spherical inorganic particles have a particle size distribution that has a D90/D10 less than or equal to 3, less than or equal to 2.5, less than or equal to 2, less than or equal to 1.5, or less than or equal to 1. The spherical inorganic particles have a nominal particle size that may be about 5 microns, about 10 microns, about 15 microns, about 20 microns, and combinations and blends thereof. In some embodiments, the spherical inorganic particles are polydisperse.

In some embodiments, the fibrillated polymer membrane includes more than one nominal particle size and/or more than one type of spherical inorganic particle within the fibrillated polymer membrane. The fibrillated polymer membrane may contain from about 10 mass% fibrillated polymer membrane to about 90 mass% spherical inorganic particles, from about 15 mass% fibrillated polymer membrane to about 85 mass% spherical inorganic particles, from about 20 mass fibrillated polymer membrane to about 80 mass% spherical inorganic particles, from about 30 mass% fibrillated polymer membrane to about 70 mass% spherical inorganic particles, from about 35 mass% fibrillated polymer membrane to about 65 mass% spherical inorganic particles, from about 40 mass% fibrillated polymer membrane to about 60 mass% spherical inorganic particles, from about 45 mass% fibrillated polymer membrane to about 55 mass% spherical inorganic particles, or from about 50 mass% fibrillated polymer membrane to about 50 mass% spherical inorganic particles. Non-limiting examples of suitable inorganic particles include silica, zeolites, hydroxyapatite, metal oxides, and combinations thereof. Additionally, the inorganic particles may be either solid or porous. Additionally, the affinity chromatography devices described herein have a hydraulic permeability from about 100 ($X 10^{-12}$ cm$^2$) to about 500 ($X 10^{-12}$ cm$^2$), from about 150 ($X 10^{-12}$ cm$^2$) to about 500 ($X 10^{-12}$ cm$^2$), from about 200 ($X 10^{-12}$ cm$^2$) to about 500 ($X 10^{-12}$ cm$^2$), from about 250 ($X 10^{-12}$ cm$^2$) to about 500 ($X 10^{-12}$ cm$^2$), from about 200 ($X 10^{-12}$ cm$^2$) to about 450 ($X 10^{-12}$ cm$^2$), from about 200 ($X 10^{-12}$ cm$^2$) to about 400 ($X 10^{-12}$ cm$^2$), from about 250 ($X 10^{-12}$ cm$^2$) to about 400 ($X 10^{-12}$ cm$^2$), or from about 300 ($X 10^{-12}$ cm$^2$) to about 400 ($X 10^{-12}$ cm$^2$).

In at least one embodiment, the fibrillated polymer membrane contains a blend of spherical inorganic particles having different nominal particle sizes. For example, the fibrillated polymer membrane may include a 90:10 mixture of a first nominal particle size (e.g., 5 microns) and a second nominal particle size (e.g., 20 microns) of the same or different spherical inorganic particle. The blend of spherical inorganic particles within the fibrillated polymer membrane may be any blend, such as, for example, a blend from 10:90 to 90:10, a blend from 30:70 to 70:30, a blend from 60:40 to 40:60, a blend from 25:75 to 75:25, a blend from 20:80 to 80:20, or a 50:50 blend. In one embodiment, the inorganic particles having a spherical shape includes 10 micron spherical particles and 20 micron spherical particles in a blend from 10:90 to 90:10. In another embodiment, the inorganic particles having a spherical shape includes 5 micron spherical particles and 10 micron spherical particles in a blend from 10:90 to 90:10. In a further embodiment, the inorganic particles having a spherical shape includes 5 micron spherical particles and 20 micron spherical particles in a blend from 10:90 to 90:10.

In some embodiments, the affinity ligand is covalently bonded to the spherical inorganic particles. In another embodiments, the affinity ligand is covalently bonded to the fibrillated polymer membrane. In a further embodiment, the affinity ligand may be bound to both the polymer membrane and the spherical inorganic particle(s). The affinity ligand may be a protein, antibody, or polysaccharide that reversibly binds to the targeted molecule. In one embodiment, the affinity ligand is a protein that reversibly binds, for example, to an Fc region of an antibody, an antibody fragment, an Fc fusion protein, or an antibody/drug conjugate. In another embodiment, the affinity ligand is an antibody, Protein L, or a polysaccharide that reversibly binds to a protein or a protein fragment to which it is specific. Exemplary affinity ligands for use in the affinity chromatography device include, but are not limited to, Protein A, Protein G, Protein L, human Fc receptor protein, antibodies that specifically bind to other proteins, and heparin. The affinity ligand may be native, recombinant, or synthetic. In yet another embodiment, the affinity ligand is a metal affinity ligand that reversibly binds to His-Tagged Proteins. In yet another embodiment, the affinity ligand may be an antibody or a polysaccharide that reversibly binds to a viral vector for which it is specific.

In at least one embodiment, the fluoropolymer membrane is a polytetrafluoroethylene (PTFE) membrane or an expanded polytetrafluoroethylene (ePTFE) membrane. Expanded polytetrafluoroethylene (ePTFE) membranes prepared in accordance with the methods described in U.S. Patent No. 7,306,729 to Bacino et al., U.S. Patent No. 3,953,566 to Gore, U.S. Patent No. 5,476,589 to Bacino, or U.S. Patent No. 5,183,545 to Branca et al. may be used herein. Further, the fluoropolymer membrane may be rendered hydrophilic (e.g., water-wettable) using known methods in the art, such as, but not limited to, the method disclosed in U.S. Patent No. 4,113,912 to Okita, et al. A coating that effectively binds to a ligand, such as described in U.S. Patent No. 5,897,955 to Drumheller, U.S. Patent No. 5,914,182 to Drumheller, or U.S. Patent No. 8,591,932 to Drumheller may be applied to the polymer membrane.

The fluoropolymer membrane may also include a polymer material including a functional tetrafluoroethylene (TFE) copolymer membrane where the functional TFE copolymer material includes a functional copolymer of TFE and PSVE (perfluorosulfonyl vinyl ether), or TFE with another suitable functional monomer, such as, but not limited to, vinylidene fluoride (VDF), vinyl acetate, or vinyl alcohol.

It is to be understood that throughout the application, the term "PTFE" is utilized herein for convenience and is meant to include not only polytetrafluoroethylene, but also expanded PTFE, expanded modified PTFE, and expanded copolymers of PTFE, such as described in U.S. Patent No. 5,708,044 to Branca, U.S. Patent No. 6,541,589 to Baillie, U.S. Patent No. 7,531,611 to Sabol et al., U.S. Patent No. 8,637,144 to Ford, and U.S. Patent No. 9,139,669 to Xu, et al.

Also, the fibrillated polymer membrane may be, for example, a fibrillatable polyolefin membrane (e.g., polyethylene membrane).

The intermediate material(s) may be a fluoropolymer film or a non-fluoropolymer film (e.g., polyethylene, expanded polyethylene, or other polyolefin film). Additionally, the intermediate film may be porous. In some embodiments, the intermediate film is a thermoplastic or thermoset polymer film.

Advantageously, the chromatography device may be used multiple times. Additionally, the chromatography device may be cleaned with a cleaning solution (e.g., sodium hydroxide, phosphoric acid, citric acid, ethanol, and the like) after each separation process or after multiple separation processes and reused.

The affinity chromatography devices described herein have a dynamic binding capacity (DBC) greater than 35 mg/ml at a residence time of 20 seconds. In addition, the affinity chromatography devices have a cycling durability of at least 100 cycles without exceeding an operating pressure of 0.3 MPa. In addition, the chromatography devices may be used multiple times without losing substantial dynamic binding capacity. Specifically, the chromatography devices may be cleaned with a cleaning solution (e.g., sodium hydroxide) after each separation process and reused. Although embodiments of the wound membrane assembly 110 and stacked membrane assembly 220 are described herein, it is to be appreciated that any number of fibrillated polymer membranes as well as any and all combinations of types of fibrillated polymer membranes, types of spherical inorganic particles, sizes of spherical inorganic particles, and orientations of the fibrillated polymer membrane(s) within the membrane assemblies 110, 220 are within the scope of this disclosure. Also, some or all of the fibrillated polymer membranes may vary in composition, thickness, permeability, etc. from each other.

The chromatography devices described herein, and components thereof can be fabricated using various processes. In some embodiments, injection molding may be used to fabricate the chromatography components provided herein. Other suitable processes can include, but are not limited to, extrusion, compression molding, solvent casting and combinations thereof. Embodiments employing two fibrillated polymer membranes that are co-expanded to produce a composite membrane assembly is also considered to be within the purview of the disclosure. Such a composite membrane assembly may contain two (or more) layers of fibrillated polymer membranes that may be co-extruded or integrated together.

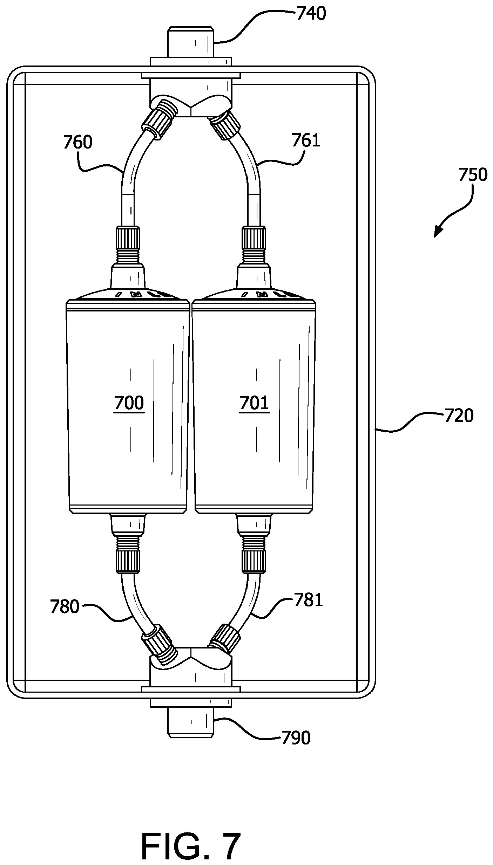

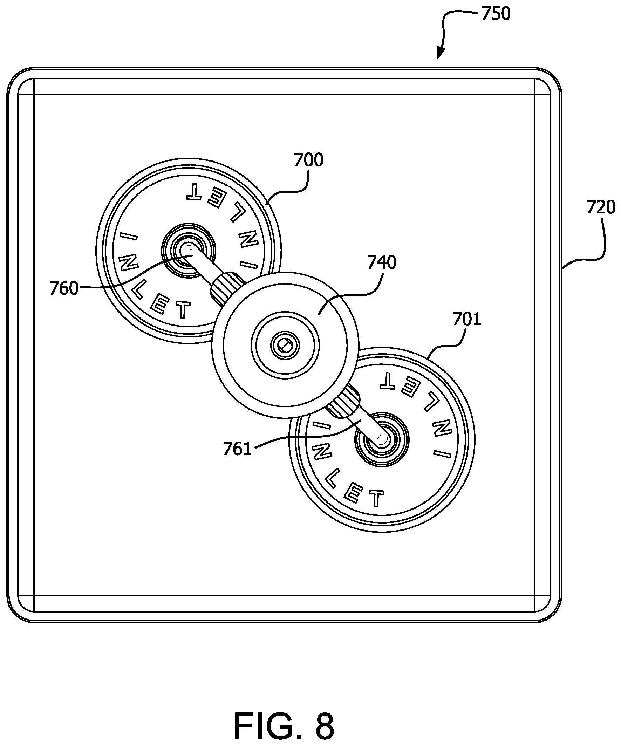

In some embodiments, the affinity chromatography devices described herein utilized in a dual manifold 750 with affinity chromatography devices 700, 701 arranged in a parallel configuration, such as is generally depicted in FIG. 7. It is to be appreciated that the affinity chromatography devices depicted in FIGS. 7-12 may include a stacked membrane assembly, a wound membrane assembly, or a combination thereof. As shown, an aqueous mixture flows into a distribution element 740. The distribution element 740 is not particularly limiting so long as it divides the flow of the aqueous mixture into at least two inlet tubes 760, 761. The split aqueous mixture in inlet tubes 760, 761 flows into chromatography devices 700, 701, where the targeted molecule is captured. An aqueous solution (i.e., the aqueous mixture minus the targeted molecule captured by the affinity ligand) flows out of the chromatography devices 700, 701 through outlet tubes 780, 781, respectively. The aqueous solution in outlet tubes 780, 781 are combined in distribution element 790 and reconstituted into a single aqueous solution. A top view of the dual manifold 750 containing the two parallel affinity chromatography devices 700, 701 is depicted in FIG. 8. In some embodiments, the manifold 750 is positioned within a housing 720.

It is to be appreciated that two chromatography devices 700, 701 are shown in FIGS. 7 and 8 for illustration only and a plurality (i.e., three or more) chromatography devices described herein may be utilized in a manifold in a parallel configuration so long as there is a similar distribution of flow and permeability across the chromatography devices. This similarity across the affinity chromatography devices allows for scalability of device volume and performance. The affinity chromatography devices utilized in the manifold (e.g., dual, quad, etc.) may be the same or different from each other. In addition, the affinity chromatography devices may be dropped into a parallel configuration system without any changes or additions to the manifold 750.

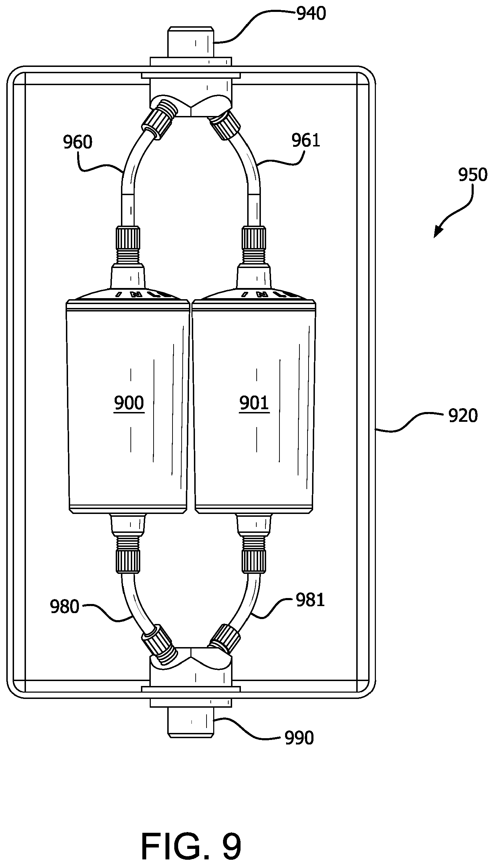

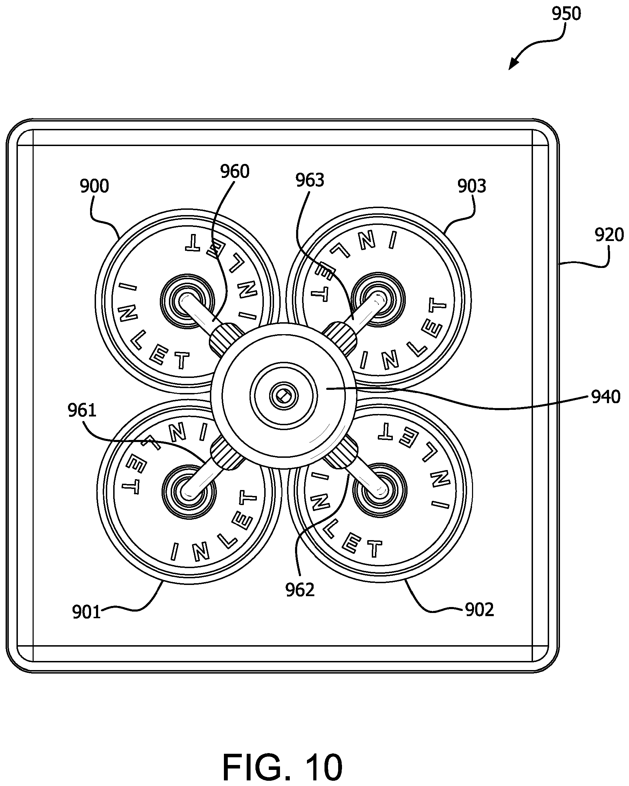

An example of a manifold containing a plurality of chromatography devices as described herein is a quad manifold depicted in FIG. 9. A top view of this quad manifold 950 is shown in FIG. 10. Similar to the dual manifold depicted in FIGS. 7 and 8, an aqueous mixture flows into a distribution element 940. The distribution element 940 divides the flow of an aqueous mixture into inlet tubes 960, 961, 962, and 963. It is to be noted that 962 and 963 are hidden behind 961 and 962, respectively in FIG. 9. The split aqueous mixture in inlet tubes 960, 961, 962, and 963 (962, and 963 not illustrated)) flow into chromatography devices 900, 901, 902, and 903 (902 and 903 (not illustrated)) respectively, where the targeted molecule is captured. An aqueous solution flows out of each of the chromatography devices 900, 901, 902, and 903 (not illustrated) through outlet tubes 980, 981, 982, and 983, respectively (note that 982 and 983 are hidden behind 980 and 981). The aqueous solution in outlet tubes 980, 981, 982, and 983 (982 and 983 not illustrated) are combined in a distribution element 990 and reconstituted into a single aqueous solution. In some embodiments, the quad manifold 950 may be positioned within a housing 920.

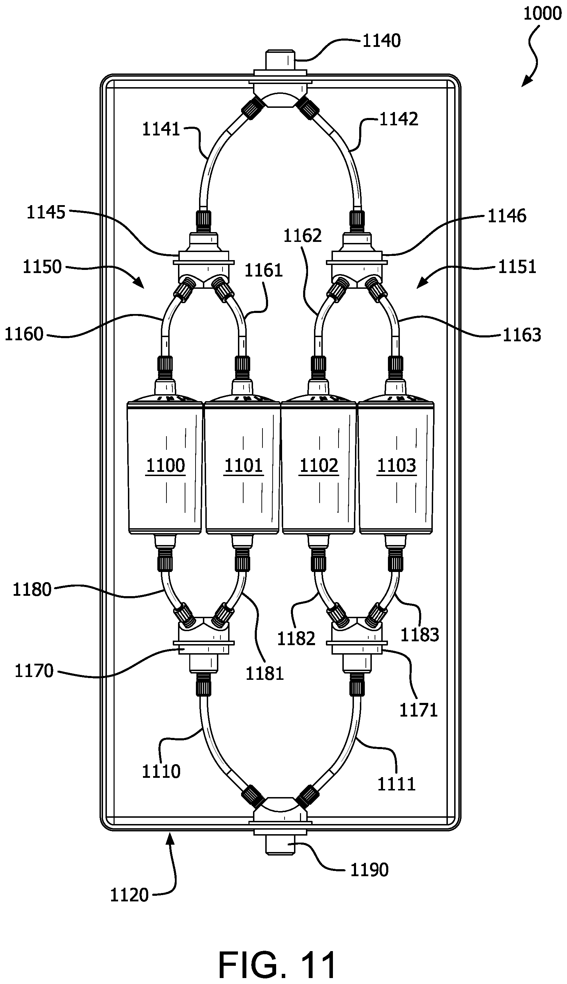

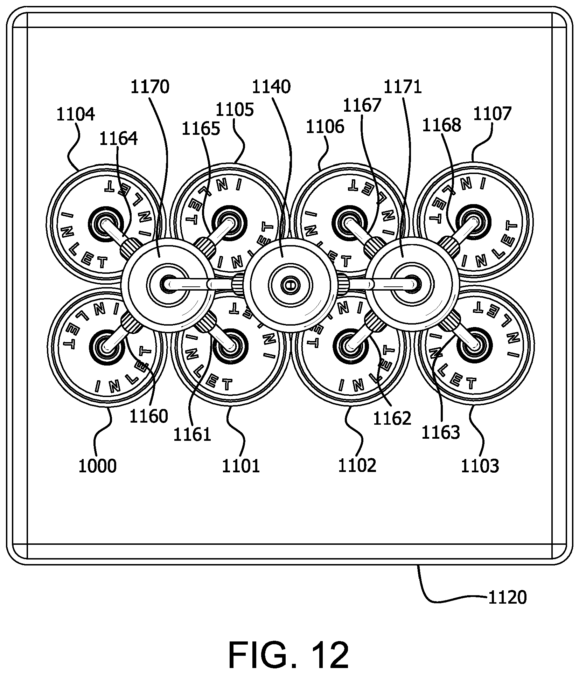

FIG. 11 depicts a device 1000 containing two manifolds 1150,1151 in a parallel configuration. A top view of the device 1000 is depicted in FIG. 12. The manifolds 1150, 1151 each contain four affinity chromatography devices, of which, two affinity chromatography devices 1100, 1101 and 1102, 1103 of each manifold 1150, 1151 is depicted in FIG. 11. The ability to utilize at least two manifolds in parallel advantageously allows for an increase in volume capacity while utilizing the chromatography devices described herein. In other words, the device 1000 eliminates the need to move to a chromatography device that is larger in volume. In addition, placing the manifolds in parallel, such as is depicted in FIG. 11, reduces concerns of over pressurizing the device 1000.

In use, an aqueous mixture flows into a distribution element 1140. The distribution element 1140 divides the flow of an aqueous mixture into two distribution tubes 1141, 1142. The split aqueous mixture in distribution tubes 1141, 1142 is then further divided by distribution elements 1145, 1146 into inlet tubes. In the embodiment depicted in FIG. 11, of the four inlet tubes of manifold 1150, inlet tubes 1160, 1161 are depicted. Similarly, of the four inlet tubes of manifold 1151, inlet tubes 1162, 1163 are depicted. It is to be appreciated that the remaining inlet tubes 1164, 1165, 1166, 1167 are hidden behind inlet tubes 1160, 1161, 1162, 1163 in FIG. 11. The aqueous mixture in the inlet tubes of the first and second manifold 1150, 1151 flow into the affinity chromatography devices. It is to be appreciated that in manifold 1150, affinity chromatography devices 1100, 1101 are depicted and in manifold 1151, affinity chromatography devices 1102, 1103 are depicted. The remaining chromatography devices 1104, 1105, 1106, 1107 are hidden behind affinity chromatography devices 1100, 1101, 1102, 1103 in FIG. 11. The targeted molecule is captured in the affinity chromatography devices.

An aqueous solution flows out of each of the chromatography devices through outlet tubes. In FIG. 11, outlet tubes 1180, 1181 of manifold 1150 and outlet tubes 1182, 1183 of manifold 1151 are depicted. It is to be appreciated that the remaining outlet tubes are hidden behind outlet tubes 1180, 1181, 1182, 1183 in FIG. 11. The aqueous solution in the outlet tubes are combined in distribution element 1170 and distribution element 1171. The combined solution then flows from the distribution elements 1170, 1170 into collection tubes 1110, 1111. The aqueous solution in collection tubes 1110, 1111 are combined in distribution element 1190 and reconstituted into a single aqueous solution. The first manifold 1150 and the second manifold 1151 may be enclosed within a housing 1120.

In some embodiments, the affinity chromatography devices within the manifold(s) and/or the manifold(s) themselves (e.g., a dual manifold (FIG. 7), quad manifold (FIG. 9)), and/or manifolds in a parallel configuration (FIG. 11) may be contained within a housing. For instance, there may be a first housing surrounding the chromatography devices in the manifold. Thus, in a dual manifold, the first housing surrounds the two affinity chromatography devices. In connection thereto, there may be a second housing that surrounds the manifold (as well as the first housing surrounding the chromatography devices). In other embodiments, only the chromatography devices in the manifold are surrounded by a housing. In further embodiments, the manifold(s) and the affinity chromatography devices may be housed in a single housing (e.g., the chromatography devices contained within the manifold(s) are not separately contained in a housing). The material forming a housing is not particularly limiting. Non-limiting examples of suitable materials include, but are not limited to, polyurethane, stainless steel, polypropylene, acrylonitrile butadiene styrene (ABS), polyethylene terephthalate (PET), polyether ether ketone (PEEK), cyclic olefin copolymer (COC), and polyethylene terephthalate glycol (PETG). Additionally, the shape of the housing unit is not limiting, and may take any form so long as the form encapsulates the affinity chromatography devices and/or the manifold(s).

In some embodiments, the present disclosure is directed to a diagnostic device that removes a targeted substance from a biological sample. The device includes a fibrillated polymer membrane that contains therein inorganic particles having a spherical shape and a nominal particle size from about 5 microns to about 20 microns. The particle size distribution has a D90/D10 less than or equal to 3 and at least one of the fibrillated polymer membrane and the inorganic particles has covalently bonded thereto a ligand that reversibly binds to the targeted substance within a biological sample. The device may further include a fluid inlet and a fluid outlet fluidly connected to the fluid inlet. Additionally, the device may include a housing member encompassing the fluid inlet, the fluid outlet, and the fibrillated polymer membrane.

Persons skilled in the art will readily appreciate that various aspects of the present disclosure can be realized by any number of methods and apparatus configured to perform the intended functions. It should also be noted that the accompanying figures referred to herein are not necessarily drawn to scale but may be exaggerated to illustrate various aspects of the present disclosure, and in that regard, the figures should not be construed as limiting.

**TEST METHODS**

It should be understood that although certain methods and equipment are described below, other methods or equipment determined suitable by one of ordinary skill in the art may be alternatively utilized.

### Method for Determining the Dynamic Binding Capacity at 10% Breakthrough

The chromatography device was inserted in an AKTA™ Pure (Cytiva, Marlborough, MA) liquid chromatography system's flow path and a single cycle consisting of the following protocol was performed. Table A sets forth the solutions utilized; Table B sets forth the protocol steps to determine the dynamic binding capacity at 10% breakthrough.

**Table A**

| Solution | Description |
|---|---|
| A | 50 mM Sodium Phosphate supplemented with 150 mM Sodium Chloride, pH~7.4 |
| B | 100 mM Citrate, pH~3.4 |
| CIP | 0.1 M NaOH |
| Feed | 2.9-3.0 mg/ml polyclonal IgG (Lee Biosciences) dissolved in Solution A |
| Storage | 20/80 v/v ethanol/water |

**Table B**

| Step | Solution | Volume of Solution Used (Number of Bed Volumes) | Bed Volume/Volumetric Flow Rate = Seconds Residence Time |
|---|---|---|---|
| 1 | A | 6 | 20 |
| 2 | Feed | Until Absorbance at 280 nm = 10% Breakthrough | 20 |
| 4 | A | 8 | 20 |
| 5 | B | 6 | 20 |
| 6 | A | 6 | 20 |
| 7 | CIP | 15 min contact time at 1 CV/min | N/A |
| 8 | A | 5 | 20 |
| 9 | Storage | 6 | 20 |

### Method for determining liquid permeability

The liquid permeability of the chromatography devices was determined using Darcy's law. Individual devices were characterized for bed cross sectional area and bed length. Solution A was used as the liquid and was characterized for viscosity. The pressure drop across the column as a function of liquid flux was measured on an AKTA™ Pure liquid chromatography system.

### Method for determining particle size and particle size distribution

Particle size and particle size distribution data were supplied by the manufacturer and were measured using the Coulter Counter technique.

### Method for Purification of CHO Cell Harvest

The chromatography devices were inserted in an AKTA™ Pure (Cytiva, Marlborough, MA) liquid chromatography system's flow path. Table C sets forth the solutions utilized to perform the CHO Cell Harvest Purifications.

**Table C**

(continued)

| Solution ID | Solution Composition | Solution Usage |
|---|---|---|
| A | 50 mM Sodium Phosphate, 150 mM Sodium Chloride; pH 7.4 | Equilibration |
| B | 50 mM Sodium Phosphate, 1.15 M Sodium Chloride; pH 7.0 | High Salt Wash |
| C | 100 mM Citrate; pH 3.4 | Elution |
| D | 100 mM Citric Acid; pH 2.0 | Acid Strip |
| E | 0.2 M NaOH | CIP |
| Harvest 1 | 1.4 - 1.5 g/L adalimumab biosimilar CHO Cell Harvest | CHO Cell Harvest; IgG1 Adalimumab Biosimilar |
| Harvest 2 | 4.0 g/L rituximab biosimilar CHO Cell Harvest | CHO Cell Harvest, IgG1 Rituximab Biosimilar |

## Method for Determining Yield for Protein Purification

Purification yields were determined by first measuring the absorbance of the protein elution pool at a wavelength of 280 nm using a Hitachi U-2900 spectrophotometer. This absorbance value was then utilized to calculate the protein concentration of the protein elution pool using Beer's Law, which is set forth below. Yield was calculated for each elution pool by dividing the total target protein mass in the elution pool (c) by the mass of target protein loaded ($c_o$) referencing the titer of either Harvest 1 or Harvest 2 from Table C using loading volumes based on Tables L, M, or P:

$$A = \varepsilon Lc$$

where:

A = absorbance
$\varepsilon$ = extinction coefficient
L = sample path length
c = total target protein mass in elution
$c_0$ = mass target protein loaded

$$\% \, Yield = \left(\frac{c}{c_0}\right) \times 100.$$

## Method for Attaching Chromatography Devices in Parallel

All affinity chromatography devices set forth in Tables K and O (set forth below) were attached in either a dual manifold configuration containing 2, Y fittings and 1/16" PEEK tubing (Devices V, W, and X in Table K), or in a quad manifold configuration containing 6, Y fittings and 1/16" Peek Tubing (Device Y), or 6, Y fittings and 1/8" FEP tubing (Device Z)) outlined in Table D.

**Table D**

| Fittings Used | Dimensions | Quantity Used | Table Reference |
|---|---|---|---|
| Y Assembly - PEEK | 1'16" OD | 2 or 6 | K&O |
| Y Assembly - PEEK | 1/8" OD | 6 | O |
| Tubing - PEEK | 1/16" OD | n/a | K&O |
| Tubing - FEP | 1/8" OD | n/a | O |

## EXAMPLES

*Example 1: Stacked Membrane Reference Particles*

A porous polytetrafluoroethylene (ePTFE) membrane having 15 mass percent ePTFE and 85 mass percent porous silica particles having a nominal particle size of 10 microns was obtained. Additionally, a porous ePTFE membrane having 15 mass percent PTFE and 85 mass percent porous silica particles having a nominal particle size of 20 micron was obtained. The porous silica particles in the ePTFE membranes listed in Table E were substantially the same with respect to other chemical and physical characteristics such as chemical composition, particle shape, nominal particle porosity, nominal particle pore dimensions and nominal particle surface areas. Table E lists some of the physical characteristics of the two porous ePTFE membranes.

**Table E**

| Porous Membrane | Mass Percent Porous Silica Particles | Mass Percent PTFE | Porous Membrane Thickness (micron) | Porous Membrane Density (grams/cc) | Nominal Porous Silica Pore Size (nm) | Average Porous Silica Particle Size (micron) | Porous Silica Particle Size Distribution (D90/D10) |
|---|---|---|---|---|---|---|---|
| A | 85 | 15 | 650 | 0.45 | 100 | 13.1 | 3.21 |
| B | 85 | 15 | 652 | 0.44 | 100 | 24.1 | 5.10 |

Porous ePTFE membranes A and B were used to manufacture affinity chromatography devices. A polypropylene flow distributor was affixed to one end of a polypropylene cylinder housing. A porous polypropylene intermediate material was placed in the housing. The desired number of ePTFE membrane layers were stacked on the polypropylene intermediate material within the housing. (See Table F). A second porous polypropylene intermediate material was placed on top of the ePTFE membrane stack. A second polypropylene flow distributor was affixed to the end of the cylindrical housing opposite the first polypropylene flow distributor. The chromatography device was sealed via a heating process.

The intermediate devices were then treated in a manner to covalently bond Protein A to the stacked ePTFE membranes. This manner is representative of that typical to those skilled in the art and is further delineated in U.S. Patent No. 10,525,376 to McManaway, et al. and in U.S. Patent No. 10,526,367 to McManaway, et al.

The affinity chromatography devices whose manufacture was described above were tested to evaluate their liquid permeability and twenty (20) second residence time dynamic binding capacities using the protocols described in the Test Methods set forth herein. The performance of each of these affinity chromatography devices is shown in Table F.

**Table F**

| Device Designation | Porous Membrane Used | Bed Volume (mL) | Device Liquid Permeability (X $10^{-12}$ cm$^2$) | Device Dynamic Binding Capacity (mg/mL) at 20 Seconds Residence Time |
|---|---|---|---|---|
| C | 8 layers of membrane A | 0.97 | 95.1 | 52.6 |
| D | 8 layers of membrane B | 0.97 | 180.2 | 41.3 |

*Example 2:* **Stacked Membranes-Spherical, Controlled Size Distribution Particle**

Spherical particles of size and size distribution described in Table G were obtained. The porous silica particles listed in Table G were substantially the same with respect to chemical and physical characteristics such as chemical composition, particle shape, nominal particle porosity, nominal particle pore dimensions and nominal particle surface areas.

**Table G**

(continued)

| Nominal Spherical Porous Silica Particle Size (micron) | Nominal Spherical Porous Silica Pore Size (nm) | Measured Average Spherical Silica Particle Size (micron) | Spherical Porous Silica Particle Size Distribution (D90/D10) |
|---|---|---|---|
| 5 | 100 | 3.8 | 1.48 |
| 10 | 100 | 8.2 | 1.29 |
| 20 | 100 | 14.4 | 1.36 |

Porous polytetrafluoroethylene (ePTFE) membranes having 15 mass percent PTFE and 85 mass percent spherical porous silica particles from those in Table G were obtained. These ePTFE membranes had varying mass mixtures of nominal particle sizes. Table H lists the respective particle size mixture ratios and the physical characteristics of the ePTFE membranes.

**Table H**

| Porous Membrane | Mass Percent Porous Spherical Silica Particles | Mass Percent PTFE | Porous Membrane Thickness (micron) | Porous Membrane Density (grams/cc) | Percent 20 Micron Nominal Spherical Particle Size | Percent 10 Micron Nominal Spherical Particle Size | Percent 5 Micron Nominal Spherical Particle Size |
|---|---|---|---|---|---|---|---|
| E | 85 | 15 | 648 | 0.48 | 100 | 0 | 0 |
| F | 85 | 15 | 659 | 0.44 | 70 | 30 | 0 |
| G | 85 | 15 | 653 | 0.45 | 50 | 50 | 0 |
| H | 85 | 15 | 657 | 0.45 | 30 | 70 | 0 |
| I | 85 | 15 | 654 | 0.47 | 0 | 100 | 0 |
| J | 85 | 15 | 619 | 0.41 | 0 | 70 | 30 |
| K | 85 | 15 | 682 | 0.45 | 0 | 30 | 70 |

Porous membranes (ePTFE) E through K were used to manufacture affinity chromatography devices in the same manner as Example 1. The chromatography devices were then treated to covalently bond Protein A to the membrane in the same manner as Example 1. The affinity chromatography devices were tested to evaluate their liquid permeability and twenty (20) second residence time dynamic binding capacities. The performance of each of these affinity chromatography devices is shown in Table I.

**Table I**

| Device Designation | Porous Membrane Used | Bed Volume (mL) | Device Liquid Permeability (X $10^{-12}$ cm$^2$) | Device Dynamic Binding Capacity (mg/mL) at 20 Seconds Residence Time |
|---|---|---|---|---|
| L | 8 layers of membrane E | 1.008 | 428.8 | 37.7 |
| M | 8 layers of membrane F | 0.999 | 355.4 | 41.1 |
| N | 8 layers of membrane G | 0.999 | 371.1 | 44.6 |
| O | 8 layers of membrane H | 0.964 | 340.0 | 49.4 |
| P | 8 layers of membrane I | 1.023 | 238.3 | 52.1 |
| Q | 9 layers of membrane J | 0.959 | 235.4 | 54.9 |
| R | 8 layers of membrane K | 0.973 | 128.5 | 61.9 |

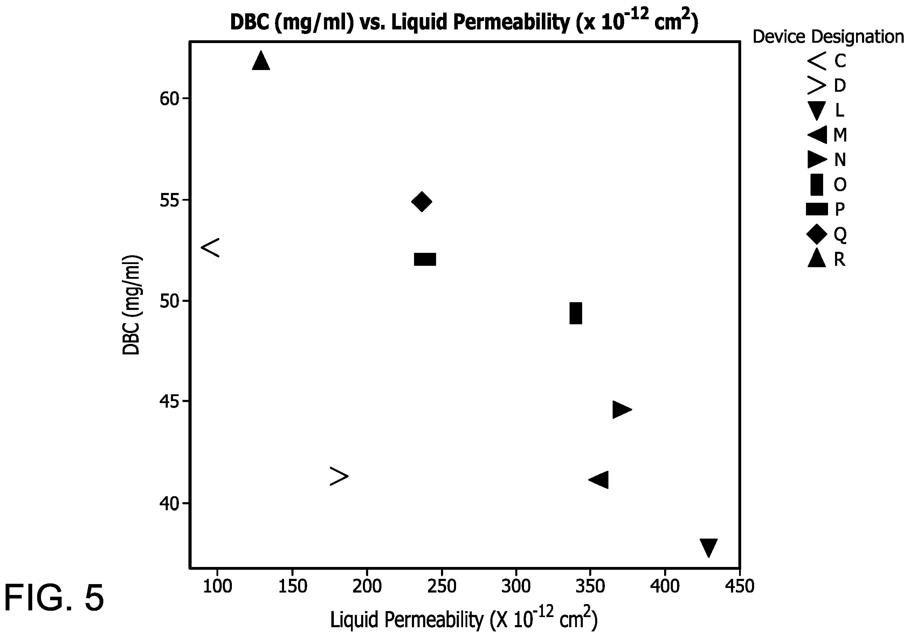

The relationship between dynamic binding capacity and liquid permeability from the devices described in Examples 1 and 2 is shown in FIG. 5 for comparison.

### Example 3: Spiral Wound Membrane

The porous ePTFE membranes F and H described in Table H were used to construct spiral wound affinity chromatography devices. A length of each PTFE membrane, with porous polypropylene intermediate materials at the opposing ends, was wound about a hollow polypropylene core. The length of the ePTFE membrane was sufficient to achieve the desired number of wraps. The ePTFE membrane edges were integrated and sealed into a polypropylene distribution cap at one end and an outlet cap on the other end. An inlet cap and outer housing were similarly sealed over the assembly such that axially oriented channels enabled radial flow through the ePTFE membrane layers, from the outer radius to the inner radius and exiting through the outlet cap.

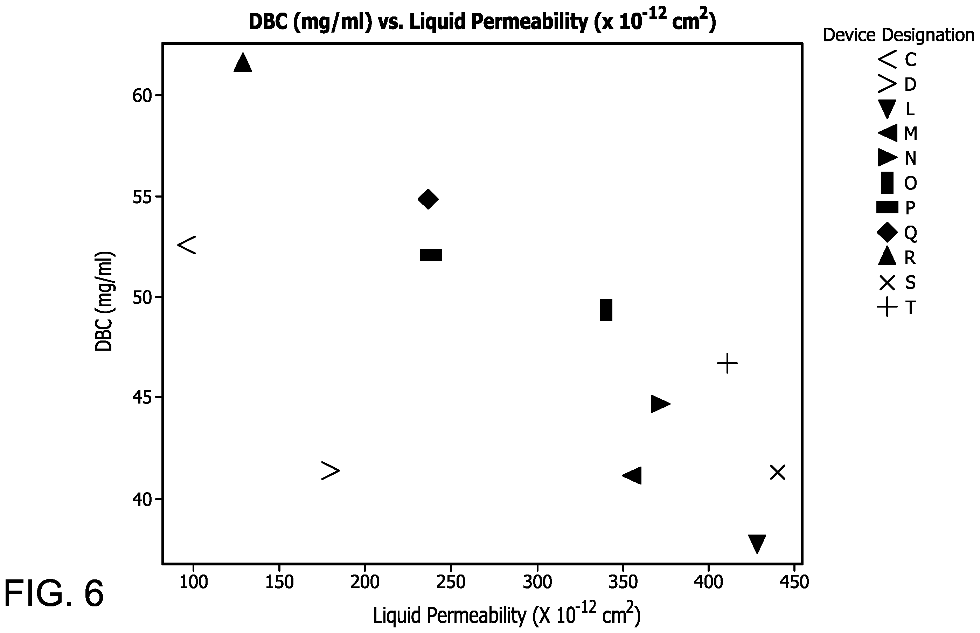

Each device was then treated to covalently bond Protein A to the membrane in the same manner as Example 1. Each affinity chromatography device was tested to evaluate its liquid permeability and twenty (20) second residence time dynamic binding capacities. The performance of the affinity chromatography devices are shown in Table J. FIG. 6 depicts the relationship of devices S and T with spiral wound membranes to devices C through R with stacked membranes.

**Table J**

| Device Designation | Porous Membrane Used | Bed Volume (mL) | Device Liquid Permeability (X $10^{-12}$ cm$^2$) | Device Dynamic Binding Capacity (mg/mL) at 20 Seconds Residence Time |
|---|---|---|---|---|
| S | 12 spiral wraps of membrane F | 19.3 | 440 | 41.3 |
| T | 12 spiral wraps of membrane H | 19.1 | 410 | 46.7 |

### Example 4: Chromatography Device V, W, and X - Dual Manifold Configuration

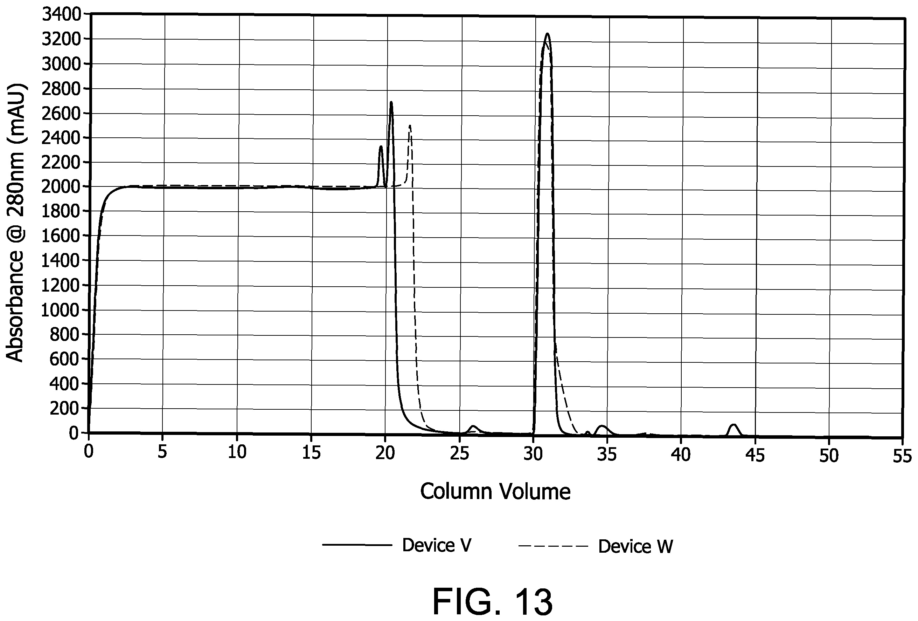

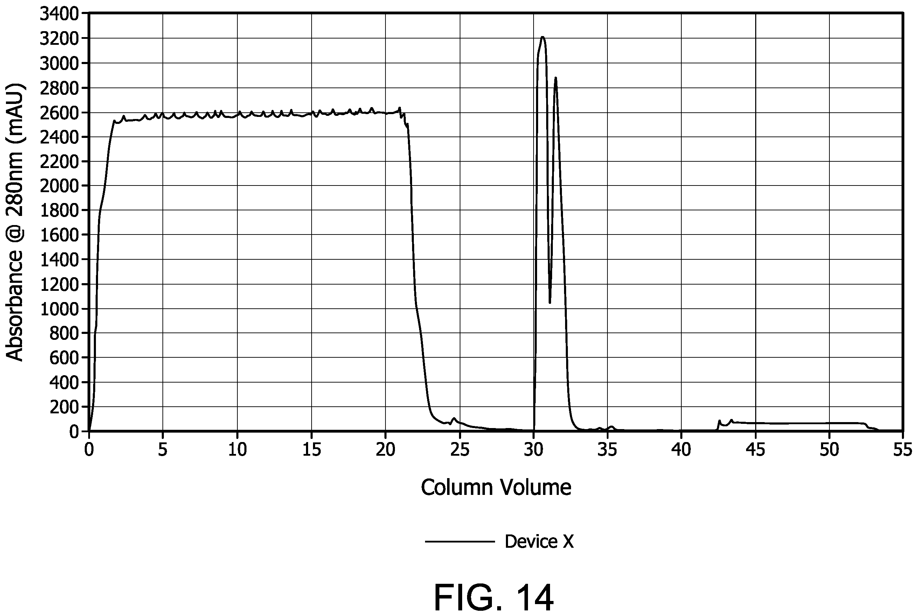

Chromatography devices V, W, and X, were configured using the fittings and tubing outlined in Table D in a dual manifold configuration as illustrated in FIG. 7. Five (5) sequential purification cycles using Harvest 1 in Table C were performed on each of chromatography devices V, W, and X. Chromatography devices V and W followed the purification conditions outlined in Table L, while chromatography device X (Cytiva, Marlborough, MA - HiScreen MabSelect SuRe LX (PN:17547415)) followed the purification conditions outlined in Table M. Purification cycles were performed to evaluate purification capability and yield performance in a dual manifold configuration. FIG. 13 depicts a representative purification cycle for chromatography devices V and W. FIG. 14 depicts a representative purification cycle for chromatography device X. Yield performance for each dual manifold is shown in Table N. Chromatography devices V and W displayed a typical chromatogram for the CHO Cell Harvest being purified, while chromatography device X displayed evidence of early breakthrough throughout the loading step as depicted in FIG. 14 by 500 to 600 mAU higher absorbance compared to devices V and W in FIG. 13. Chromatography device X also displayed evidence of a double elution peak which can be observed in FIG. 14. This double elution peak was not observed in devices V and W.

**Table K**

| Device ID | Device Configuration | Bed Composition |
|---|---|---|
| V | Stacked Membrane | Membrane A |
| W | Stacked Membrane | Membrane F |
| X | Pre-Packed Column | Agarose Resin |

**Table L**

|  |
|---|

(continued)

| Step | Solution | Number of Membrane Volumes | Residence time (seconds) |
|------|----------|----------------------------|--------------------------|
| 1 | A | 5 | 20 |
| 2 | Harvest 1 | 21.4 | 20 |
| 3 | B | 6 | 20 |
| 4 | A | 6 | 20 |
| 5 | C | 4 | 20 |
| 6 | D | 3 | 20 |
| 7 | A | 3 | 20 |
| 8 | E | 3.6 | 20 |
| 9 | A | 5 | 20 |

**Table M**

| Step | Solution | Number of Membrane Volumes | Residence time (seconds) |
|------|----------|----------------------------|--------------------------|
| 1 | A | 5 | 120 |
| 2 | Harvest 1 | 21.3 | 120 |
| 3 | B | 6 | 120 |
| 4 | A | 6 | 120 |
| 5 | C | 4 | 120 |
| 6 | D | 3 | 120 |
| 7 | A | 3 | 120 |
| 8 | E | 3.6 | 60 |
| 9 | A | 5 | 120 |

**Table N**

| Manifold Device ID | Purification Yield (%) |
|--------------------|------------------------|
| Device V | > 95% |
| Device W | > 95% |
| Device X | < 65% |

**Example 5: *Chromatography device Y and Z - Stacked vs. Spiral Wound Quad Manifold Configuration***

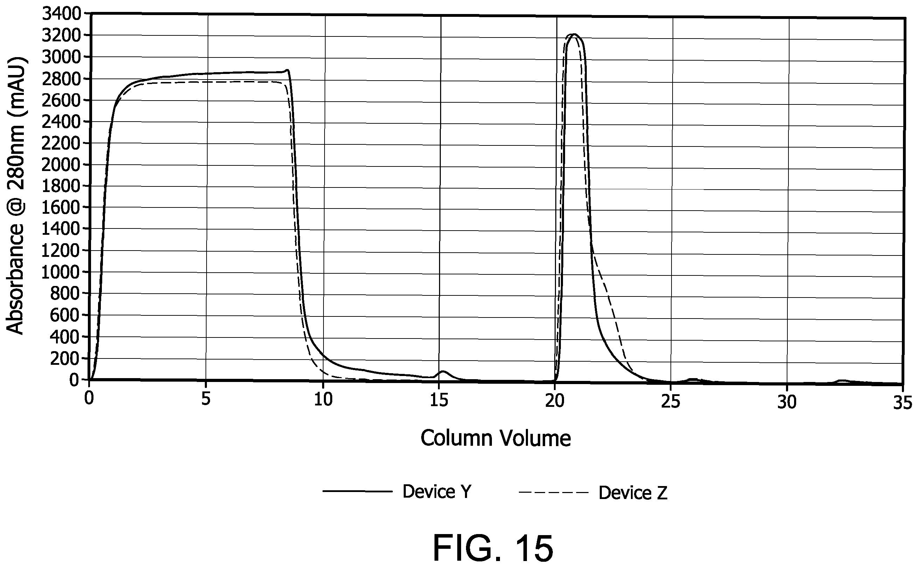

Chromatography devices Y and Z were configured using the fittings and tubing outlined in Table D in a quad manifold configuration as identified in FIG. 9. Purification cycles using Harvest 2 in Table C were performed using the quad manifolds. Chromatography devices Y and Z followed the purification conditions outlined in Table P to evaluate purification capability and yield performance in a quad manifold configuration. FIG. 15 depicts a representative purification cycle for both chromatography device Y and chromatography device Z. Yield performance for each device is depicted in Table Q.

**Table O**

| Device ID | Device Configuration | Bed Composition |
|-----------|----------------------|-----------------|
| Y | Stacked Membrane | Membrane F |

(continued)

| Device ID | Device Configuration | Bed Composition |
|---|---|---|
| Z | Spiral Wound Membrane | Membrane F |

**Table P**

| Solution | Number of Membrane Volumes | Residence time (seconds) |
|---|---|---|
| A | 5 | 30 |
| Harvest 2 | 32mg/mL * membrane volume | 30 |
| B | 6 | 30 |
| A | 6 | 30 |
| C | 4 | 30 |
| D | 3 | 30 |
| A | 3 | 30 |
| E | 3.6 | 50 |
| A | 5 | 30 |

**Table Q**

| Manifold Device ID | Purification Yield (%) |
|---|---|
| Device Y | > 95% |
| Device Z | > 94% |

The invention of this application has been described above both generically and with regard to specific embodiments. It will be apparent to those skilled in the art that various modifications and variations can be made in the embodiments without departing from the scope of the disclosure. Thus, it is intended that the embodiments cover the modifications and variations of this invention provided they come within the scope of the appended claims and their equivalents.

**Claims**

1. An article comprising:
   an affinity chromatography device (100, 200, 300) including:

   a fluid inlet (80);
   a fluid outlet (85) fluidly connected to the fluid inlet; and
   a fibrillated polymer membrane (210) positioned between the fluid inlet (280) and fluid outlet (285) and containing therein inorganic particles having a spherical shape and a nominal particle size selected from 5 microns, 10 microns, 15 microns, 20 microns, and combinations thereof; and
   a housing member (50) encompassing the fluid inlet (80), the fluid outlet (85), and the fibrillated polymer membrane (210),
   wherein the spherical shape comprises a round or nearly round shape where the distance from the center of the inorganic particle to the outer edge of the particle at any point is the same or nearly the same distance,
   wherein a particle size distribution has a D90/D10 less than or equal to 3,
   wherein the affinity chromatography device (100, 200, 300) has a dynamic binding capacity (DBC) of at least 35 mg/ml at 10% breakthrough at a residence time of 20 seconds,
   wherein the affinity chromatography device (100, 200, 300) has a hydraulic permeability from 100 (X $10^{-12}$ cm$^2$) to 500 (X $10^{-12}$ cm$^2$), and

wherein at least one of the fibrillated polymer membrane (210) and the inorganic particles has covalently bonded thereto an affinity ligand that reversibly binds to a protein, antibody, viral vector, and combinations thereof.

2. The article of claim 1, wherein the inorganic particles having a spherical shape are selected from silica, zeolites, hydroxyapatite, metal oxides and combinations thereof.

3. The article of claim 1, wherein the fibrillated polymer membrane (210) comprises an expanded polytetrafluoroethylene membrane, an expanded modified polytetrafluoroethylene membrane, an expanded tetrafluoroethylene copolymer membrane, or an expanded polyethylene membrane.

4. The article of claim 1, wherein the fibrillated polymer membrane (210) is an expanded polytetrafluoroethylene membrane.

5. The article of claim 1, wherein the affinity ligand is selected from Protein A, Protein G, Protein L, human Fc receptor protein, antibodies, polysaccharides, and combinations thereof.

6. The article of claim 1, wherein the inorganic particles comprise at least a first inorganic particle having a spherical shape and a first nominal particle size and a second inorganic particle having a spherical shape and a second nominal particle size, the first and second nominal particle sizes being different from each other.

7. The article of claim 1, wherein the inorganic particles having a spherical shape comprises a blend of 10-micron spherical particles and 20-micron spherical particles, and wherein the blend is from 10:90 to 90:10.

8. The article of claim 1, wherein the inorganic particles having a spherical shape comprises a blend of 5-micron spherical particles and 10-micron spherical particles, and wherein the blend is from 10:90 to 90:10.

9. The article of claim 1, wherein the inorganic particles having a spherical shape comprises a blend of 5-micron spherical particles and 20-micron spherical particles, and wherein the blend is from 10:90 to 90:10.

10. The article of claim 1, wherein the affinity chromatography device (100, 200, 300) has a cycling durability of at least 100 cycles at an operating pressure less than 0.3 MPa.

11. The article of claim 1, wherein the fibrillated polymer membrane has a wound configuration.

12. The article of claim 1, wherein the fibrillated polymer membrane has a stacked configuration.

13. The article of claim 1, wherein the fibrillated polymer membrane has a wound configuration, a stacked configuration, and a combination thereof.

14. The article of claim 1, wherein an inner intermediate material (200') is circumferentially positioned on an outer surface of a centrally located core (150), and wherein the fibrillated polymer membrane (210) is circumferentially positioned around the inner intermediate material (200').

15. The article of claim 14, wherein an outer intermediate material (220) is circumferentially positioned on the fibrillated polymer membrane (210).

16. The article of claim 14, wherein the inner intermediate material (200') and the outer intermediate material (220) are selected from a porous fluoropolymer film, a porous non-fluoropolymer film, a porous non-woven material, and a porous woven material.

17. The article of claim 14 , wherein at least one of the inner intermediate material (200') and the outer intermediate material (200') is a polypropylene non-woven material.

18. Use of the article of any one of claims 1 to 17 to separate the targeted molecule from a fluid stream.

19. A manifold (750) comprising at least two of the affinity chromatography devices (700, 701) of any one of claims 1 to 17 arranged in a parallel configuration.

20. The manifold (750) of claim 19, wherein the manifold (750) is enclosed within a housing (720).

21. A device (1000) comprising a first manifold (1150) and a second manifold (1151) in a parallel configuration, wherein each of the first manifold (1150) and the second manifold (1151) includes at least two of the affinity chromatography devices (1100, 1101, 1102, 1103) of any one of claims 1 to 17.

22. The device of claim 21, wherein the first manifold (1150) and the second manifold (1151) are enclosed within a housing (1120).

**Patentansprüche**

1. Artikel, umfassend:
   eine Affinitätschromatographievorrichtung (100, 200, 300), beinhaltend:

   einen Fluideinlass (80);
   einen Fluidauslass (85), der fluidisch mit dem Fluideinlass verbunden ist; und
   eine fibrillierte Polymermembran (210), die zwischen dem Fluideinlass (280) und dem Fluidauslass (285) positioniert ist und darin anorganische Partikel mit einer kugelförmigen Form und einer nominalen Partikelgröße ausgewählt aus 5 Mikrometern, 10 Mikrometern, 15 Mikrometern, 20 Mikrometern und Kombinationen davon enthält; und
   ein Gehäuseelement (50), das den Fluideinlass (80), den Fluidauslass (85) und die fibrillierte Polymermembran (210) umschließt,
   wobei die kugelförmige Form eine runde oder nahezu runde Form umfasst, wobei der Abstand von der Mitte des anorganischen Partikels zu der äußeren Kante des Partikels an einem beliebigen Punkt der gleiche oder nahezu der gleiche Abstand ist,
   wobei eine Partikelgrößenverteilung eine D90/D10 von weniger als oder gleich 3 aufweist,
   wobei die Affinitätschromatographievorrichtung (100, 200, 300) eine dynamische Bindungskapazität (DBC) von zumindest 35 mg/ml bei 10 % Durchbruch bei einer Verweilzeit von 20 Sekunden aufweist,
   wobei die Affinitätschromatographievorrichtung (100, 200, 300) eine hydraulische Permeabilität von 100 ($X\ 10^{-12}$ $cm^2$) bis 500 ($X\ 10^{-12}$ $cm^2$) aufweist, und
   wobei zumindest eines von der fibrillierten Polymermembran (210) und den anorganischen Partikeln einen Affinitätsliganden kovalent daran gebunden aufweist, der reversibel an ein Protein, einen Antikörper, einen viralen Vektor und Kombinationen davon bindet.

2. Artikel nach Anspruch 1, wobei die anorganischen Partikel mit einer kugelförmigen Form aus Siliciumdioxid, Zeolithen, Hydroxyapatit, Metalloxiden und Kombinationen davon ausgewählt sind.

3. Artikel nach Anspruch 1, wobei die fibrillierte Polymermembran (210) eine expandierte Polytetrafluorethylenmembran, eine expandierte modifizierte Polytetrafluorethylenmembran, eine expandierte Tetrafluorethylencopolymermembran oder eine expandierte Polyethylenmembran umfasst.

4. Artikel nach Anspruch 1, wobei die fibrillierte Polymermembran (210) eine expandierte Polytetrafluorethylenmembran ist.

5. Artikel nach Anspruch 1, wobei der Affinitätsligand ausgewählt ist aus Protein A, Protein G, Protein L, menschlichem Fc-Rezeptor-Protein, Antikörpern, Polysacchariden und Kombinationen davon.

6. Artikel nach Anspruch 1, wobei die anorganischen Partikel zumindest ein erstes anorganisches Partikel mit einer kugelförmigen Form und einer ersten nominalen Partikelgröße und ein zweites anorganisches Partikel mit einer kugelförmigen Form und einer zweiten nominalen Partikelgröße umfassen, wobei sich die erste und die zweite nominale Partikelgröße voneinander unterscheiden.

7. Artikel nach Anspruch 1, wobei die anorganischen Partikel mit einer kugelförmigen Form eine Mischung aus kugelförmigen 10-Mikrometer-Partikeln und kugelförmigen 20-Mikrometer-Partikeln umfassen und wobei die Mischung von 10:90 bis 90:10 ist.

8. Artikel nach Anspruch 1, wobei die anorganischen Partikel mit einer kugelförmigen Form eine Mischung aus kugelförmigen 5-Mikrometer-Partikeln und kugelförmigen 10-Mikrometer-Partikeln umfassen und wobei die Mischung von 10:90 bis 90:10 ist.

9. Artikel nach Anspruch 1, wobei die anorganischen Partikel mit einer kugelförmigen Form eine Mischung aus kugelförmigen 5-Mikrometer-Partikeln und kugelförmigen 20-Mikrometer-Partikeln umfassen und wobei die Mischung von 10:90 bis 90:10 ist.

10. Artikel nach Anspruch 1, wobei die Affinitätschromatographievorrichtung (100, 200, 300) eine Zyklenbeständigkeit von zumindest 100 Zyklen bei einem Betriebsdruck von weniger als 0,3 MPa aufweist.

11. Artikel nach Anspruch 1, wobei die fibrillierte Polymermembran eine gewundene Konfiguration aufweist.

12. Artikel nach Anspruch 1, wobei die fibrillierte Polymermembran eine gestapelte Konfiguration aufweist.

13. Artikel nach Anspruch 1, wobei die fibrillierte Polymermembran eine gewundene Konfiguration, eine gestapelte Konfiguration und eine Kombination davon aufweist.

14. Artikel nach Anspruch 1, wobei ein inneres Zwischenmaterial (200') umlaufend auf einer äußeren Oberfläche eines sich zentral befindenden Kerns (150) positioniert ist und wobei die fibrillierte Polymermembran (210) umlaufend um das innere Zwischenmaterial (200') positioniert ist.

15. Artikel nach Anspruch 14, wobei ein äußeres Zwischenmaterial (220) umlaufend auf der fibrillierten Polymermembran (210) positioniert ist.

16. Artikel nach Anspruch 14, wobei das innere Zwischenmaterial (200') und das äußere Zwischenmaterial (220) aus einem porösen Fluorpolymerfilm, einem porösen Nicht-Fluorpolymerfilm, einem porösen Nichgewebematerial und einem porösen Gewebematerial ausgewählt sind.

17. Artikel nach Anspruch 14 , wobei zumindest eines von dem inneren Zwischenmaterial (200') und dem äußeren Zwischenmaterial (200') ein Polypropylen-Nichgewebematerial ist.

18. Verwendung des Artikels nach einem der Ansprüche 1 bis 17, um das targetierte Molekül von einem Fluidstrom zu trennen.

19. Verteiler (750), umfassend zumindest zwei der Affinitätschromatographievorrichtungen (700, 701) nach einem der Ansprüche 1 bis 17, die in einer parallelen Konfiguration angeordnet sind.

20. Verteiler (750) nach Anspruch 19, wobei der Verteiler (750) innerhalb eines Gehäuses (720) umschlossen ist.

21. Vorrichtung (1000), umfassend einen ersten Verteiler (1150) und einen zweiten Verteiler (1151) in einer parallelen Konfiguration, wobei jeder von dem ersten Verteiler (1150) und dem zweiten Verteiler (1151) zumindest zwei der Affinitätschromatographievorrichtungen (1100, 1101, 1102, 1103) nach einem der Ansprüche 1 bis 17 beinhaltet.

22. Vorrichtung nach Anspruch 21, wobei der erste Verteiler (1150) und der zweite Verteiler (1151) innerhalb eines Gehäuses (1120) umschlossen sind.


**Revendications**

1. Article comprenant :
   un dispositif de chromatographie d'affinité (100, 200, 300) comprenant :

   une entrée de fluide (80) ;
   une sortie de fluide (85) reliée de manière fluidique à l'entrée de fluide ; et
   une membrane polymère fibrillée (210) positionnée entre l'entrée de fluide (280) et la sortie de fluide (285) et contenant dans celle-ci des particules inorganiques présentant une forme sphérique et une taille de particule nominale choisie parmi 5 microns, 10 microns, 15 microns, 20 microns, et des combinaisons de ceux-ci ; et
   un élément de boîtier (50) enfermant l'entrée de fluide (80), la sortie de fluide (85) et la membrane polymère fibrillée (210),

dans lequel la forme sphérique comprend une forme ronde ou presque ronde où la distance du centre de la particule inorganique au bord externe de la particule au niveau de tout point est la même ou presque la même distance,

dans lequel une distribution de taille de particule présente un D90/D10 inférieur ou égal à 3,

dans lequel le dispositif de chromatographie d'affinité (100, 200, 300) présente une capacité de liaison dynamique (DBC) d'au moins 35 mg/ml à 10 % de percée à un temps de séjour de 20 secondes,

dans lequel le dispositif de chromatographie d'affinité (100, 200, 300) présente une perméabilité hydraulique de 100 (X $10^{-12}$ cm$^2$) à 500 (X $10^{-12}$ cm$^2$), et

dans lequel au moins l'une de la membrane polymère fibrillée (210) et des particules inorganiques s'est liée de manière covalente à un ligand d'affinité qui se lie de manière réversible à une protéine, un anticorps, un vecteur viral et des combinaisons de ceux-ci.

2. Article de la revendication 1, dans lequel les particules inorganiques présentant une forme sphérique sont choisies parmi la silice, les zéolites, l'hydroxyapatite, les oxydes métalliques et des combinaisons de ceux-ci.

3. Article de la revendication 1, dans lequel la membrane polymère fibrillée (210) comprend une membrane en polytétrafluoroéthylène expansé, une membrane en polytétrafluoroéthylène modifié expansé, une membrane en copolymère de tétrafluoroéthylène expansé ou une membrane en polyéthylène expansé.

4. Article de la revendication 1, dans lequel la membrane polymère fibrillée (210) est une membrane en polytétrafluoroéthylène expansé.

5. Article de la revendication 1, dans lequel le ligand d'affinité est choisi parmi la protéine A, la protéine G, la protéine L, la protéine du récepteur Fc humain, les anticorps, les polysaccharides et des combinaisons de ceux-ci.

6. Article de la revendication 1, dans lequel les particules inorganiques comprennent au moins une première particule inorganique présentant une forme sphérique et une première taille de particule nominale et une seconde particule inorganique présentant une forme sphérique et une seconde taille de particule nominale, les première et seconde tailles de particule nominale étant différentes l'une de l'autre.

7. Article de la revendication 1, dans lequel les particules inorganiques présentant une forme sphérique comprennent un mélange de particules sphériques de 10 microns et de particules sphériques de 20 microns, et dans lequel le mélange est de 10:90 à 90:10.

8. Article de la revendication 1, dans lequel les particules inorganiques présentant une forme sphérique comprennent un mélange de particules sphériques de 5 microns et de particules sphériques de 10 microns, et dans lequel le mélange est de 10:90 à 90:10.

9. Article de la revendication 1, dans lequel les particules inorganiques présentant une forme sphérique comprennent un mélange de particules sphériques de 5 microns et de particules sphériques de 20 microns, et dans lequel le mélange est de 10:90 à 90:10.

10. Article de la revendication 1, dans lequel le dispositif de chromatographie d'affinité (100, 200, 300) présente une durabilité de cycle d'au moins 100 cycles à une pression de fonctionnement inférieure à 0,3 MPa.

11. Article de la revendication 1, dans lequel la membrane polymère fibrillée présente une configuration enroulée.

12. Article de la revendication 1, dans lequel la membrane polymère fibrillée présente une configuration empilée.

13. Article de la revendication 1, dans lequel la membrane polymère fibrillée présente une configuration enroulée, une configuration empilée et une combinaison de celles-ci.

14. Article de la revendication 1, dans lequel un matériau intermédiaire interne (200') est positionné de manière circonférentielle sur une surface externe d'un noyau central (150) et dans lequel la membrane polymère fibrillée (210) est positionnée de manière circonférentielle autour du matériau intermédiaire interne (200').

15. Article de la revendication 14, dans lequel un matériau intermédiaire externe (220) est positionné de manière circonférentielle sur la membrane polymère fibrillée (210).

16. Article de la revendication 14, dans lequel le matériau intermédiaire interne (200') et le matériau intermédiaire externe (220) sont choisis parmi un film en fluoropolymère poreux, un film n'étant pas en fluoropolymère poreux, un matériau non tissé poreux et un matériau tissé poreux.

17. Article de la revendication 14, dans lequel au moins l'un du matériau intermédiaire interne (200') et du matériau intermédiaire externe (200') est un matériau non tissé en polypropylène.

18. Utilisation de l'article de l'une quelconque des revendications 1 à 17 pour séparer la molécule ciblée d'un flux de fluide.

19. Collecteur (750) comprenant au moins deux des dispositifs de chromatographie d'affinité (700, 701) de l'une quelconque des revendications 1 à 17 agencés dans une configuration parallèle.

20. Collecteur (750) de la revendication 19, dans lequel le collecteur (750) est enfermé au sein d'un boîtier (720).

21. Dispositif (1000) comprenant un premier collecteur (1150) et un second collecteur (1151) dans une configuration parallèle, dans lequel chacun du premier collecteur (1150) et du second collecteur (1151) comprend au moins deux des dispositifs de chromatographie d'affinité (1100, 1101, 1102, 1103) de l'une quelconque des revendications 1 à 17.

22. Dispositif de la revendication 21, dans lequel le premier collecteur (1150) et le second collecteur (1151) sont enfermés au sein d'un boîtier (1120).

FIG. 1

FIG. 2

FIG. 3

FIG. 4

**DBC (mg/ml) vs. Liquid Permeability (x $10^{-12}$ cm$^2$)**

FIG. 5

Device Designation
- $<$ C
- $>$ D
- ▼ L
- ◀ M
- ▶ N
- ■ O
- ▬ P
- ◆ Q
- ▲ R

FIG. 6

FIG. 7

FIG. 8

FIG. 9

FIG. 10

FIG. 11

## FIG. 12

FIG. 13

EP 4 210 853 B1

FIG. 14

EP 4 210 853 B1

FIG. 15

EP 4 210 853 B1

# EP 4 210 853 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2017176522 A
- WO 2017014817 A
- US 7306729 B, Bacino
- US 3953566 A, Gore
- US 5476589 A, Bacino
- US 5183545 A, Branca
- US 4113912 A, Okita
- US 5897955 A, Drumheller
- US 5914182 A, Drumheller
- US 8591932 B, Drumheller
- US 5708044 A, Branca
- US 6541589 B, Baillie
- US 7531611 B, Sabol
- US 8637144 B, Ford
- US 9139669 B, Xu
- US 10525376 B, McManaway
- US 10526367 B, McManaway